# EUROPEAN PATENT APPLICATION

(11) **EP 4 645 301 A1**
(43) Date of publication of application: **05.11.2025**
(21) Application number: 23911257.6
(22) Date of filing: 29.08.2023
(51) Int. Cl.: G10K 15/02, H04L 67/51, H04R 3/12

(54) **AUDIO SYSTEM, WIRELESS SPEAKER SYSTEM, WIRELESS SPEAKER, WIRELESS TERMINAL, PROGRAM, AND AUDIO PLAYBACK METHOD**

(30) Priority: 26.12.2022 JP 2022208778
(71) Applicant: D&M Holdings Inc., Kawasaki-shi Kanagawa 210-8569 (JP)
(72) Inventor: SAGAWA, Akiko, Shirakawa-shi Fukushima 961-0838 (JP)
(74) Representative: Mewburn Ellis LLP
(86) International application number: PCT/JP2023/031104
(87) International publication number: WO 2024/142473

(57) **Abstract**

To make it possible to perform group playback of audio data for the same song between a plurality of wireless speaker systems belonging to different networks, and to make it possible for each user of a plurality of wireless speaker systems belonging to the same group to easily change the song undergoing group playback. [Solution] A media server 4 simultaneously distributes audio data for the same song to a plurality of wireless speaker systems 1 that gained access using the same key ID. The media server 4 also transmits a song list to the above wireless speaker systems 1, and when a broadcast request is received from one of the wireless speaker systems 1, the broadcast of audio data being currently simultaneously broadcast is ended, and audio data for the song designated in the broadcast request is simultaneously broadcast to all wireless speaker systems 1 belonging to the same group as the source of the broadcast request.

## Description

### Technical Field

The present invention relates to a technology for forming a group of two or more wireless speaker systems and performing group reproduction (synchronous reproduction) of the same audio data by the wireless speaker systems belonging to the same group.

### Background Art

In Patent Literature 1, there is disclosed a wireless speaker system which performs group reproduction of the same audio data by two or more wireless speakers. In this wireless speaker system, one of a plurality of wireless speakers belonging to the same group serves as a master (group leader) to download audio data from a media server and reproduce and output the audio data and to transmit the reproduced data to each of the other wireless speakers (slaves) belonging to the same group and cause those speakers to output the reproduced data as well. This enables the group reproduction of the same audio data from a plurality of wireless speakers belonging to the same group.

Further, in Patent Literature 2, there is disclosed a video conferencing system in which a video conference is held among a plurality of geographically separated users through use of video conferencing terminals connected to the Internet. Such a video conferencing system allows a plurality of geographically separated users to hold a social gathering or a party while viewing faces of other participants displayed on video conferencing screens of the video conferencing terminals.

### Citation List

### Patent Literature

[PTL 1] US 7987294 B2
[PTL 2] JP 2015-228669 A

### Summary of Invention

### Technical Problem

When a plurality of geographically separated users can hold a social gathering or a party while simultaneously listening to the same tune through use of the video conferencing system as described in Patent Literature 2, the plurality of geographically separated users can enjoy the social gathering or the party while feeling just like sharing the same space.

Here, it is conceivable that one of a plurality of users reproduces and outputs audio data on a tune through use of an audio system in his or her own room, and collects a sound thereof by a microphone of a video conferencing terminal, and the collected sound is output from speakers of video conferencing terminals of the other users through the video conferencing system, to thereby allow the plurality of users to simultaneously listen to the same tune. However, this lacks a realistic feeling compared to when each of the plurality of users reproduces and outputs the audio data on the tune through use of an audio system in his or her own room.

Further, the wireless speaker system of Patent Literature 1 is based on the premise that wireless speakers belonging to the same group belong to the same network, and does not take into account a case in which those speakers belong to different networks that are geographically separated through the Internet.

It is also conceivable that one of the plurality of users sets up a website for streaming reproduction, and each user accesses this website through use of his or her own audio system to perform streaming reproduction. However, in this case, when each user other than the user who has set up the website for streaming reproduction wishes to reproduce audio data on a desired tune, he or she is required to inform the user who has set up the website for streaming reproduction of the desired tune to request streaming reproduction thereof, which is troublesome.

The present invention has been made in view of the above-mentioned circumstances, and an object thereof is to provide an audio reproduction technology which enables a plurality of wireless speakers belonging to different networks to perform group reproduction of audio data on the same tune, and which enables each of users of the plurality of wireless speakers to easily change the tune to be subjected to the group reproduction.

### Solution to Problem

In order to solve the above-mentioned problems, an audio system according to the present invention includes: a plurality of wireless speaker systems each including a wireless speaker and a wireless terminal that functions as a remote controller for the wireless speakers; and a media server that distributes audio data to the wireless speaker systems.

The plurality of wireless speaker systems share a key ID for forming a group, and access the media server through use of this key ID to receive audio data from the media server and reproduce and output the received audio data, and to receive a tune list from the media server and display a tune selection screen including this tune list. When a reproduction operation accompanied by tune selection is received from a user through the tune selection screen, a distribution request accompanied by specification of a tune selected by this reproduction operation is transmitted to the media server.

The media server simultaneously distributes audio data on the same tune to a plurality of wireless speaker systems that have accessed the media server through use of the same key ID. Further, when the distribution request is received from any one of those plurality of wireless speaker systems, the media server ends the distribution of the audio data currently being simultaneously distributed, and simultaneously distributes the audio data on the tune specified in the distribution request to those plurality of wireless speaker systems.

In this case, the key ID can be shared among the plurality of wireless speaker systems through video conferencing, a social networking service (SNS), electronic mail, or the like.

For example, according to one embodiment of the present invention, there is provided an audio system including: a plurality of wireless speaker systems each including a wireless speaker and a wireless terminal that functions as a remote controller for the wireless speaker; and a media server configured to distribute audio data to the plurality of wireless speaker systems, wherein each of the plurality of wireless speaker systems includes: key ID storage means for storing a key ID shared with another of the plurality of wireless speaker systems that forms a group together with the each of the plurality of wireless speaker systems; access means for accessing the media server through use of the key ID to achieve connection to the media server; tune reception means for receiving audio data on a tune from the media server to which the connection has been achieved by the access means; tune list reception means for receiving a tune list from the media server to which the connection has been achieved by the access means; reproduction-and-output means for reproducing and outputting the audio data on the tune received by the tune reception means; reproduction operation reception means for displaying a tune selection screen including the tune list received by the tune list reception means and receiving a reproduction operation accompanied by tune selection from a user; and distribution requesting means for transmitting, to the media server, a distribution request accompanied by specification of a tune selected by the reproduction operation received by the reproduction operation reception means, wherein the media server includes: group management means for performing group management on the plurality of wireless speaker systems that have accessed the media server through use of the same key ID; tune distribution means for simultaneously distributing the audio data on the same tune to the plurality of wireless speaker systems subjected to the group management by the group management means; and tune list distribution means for distributing the tune list to the plurality of wireless speaker systems subjected to the group management by the group management means, and wherein the tune distribution means is configured to change, when the distribution request is received from any one of the plurality of wireless speaker systems subjected to the group management by the group management means, the audio data on the tune to be simultaneously distributed to the plurality of wireless speaker systems to the audio data on the tune specified by the distribution request.

### Advantageous Effects of Invention

In the present invention, the media server simultaneously distributes audio data on the same tune to a plurality of wireless speaker systems that have accessed the media server through use of the same key ID, and hence sharing the key ID among the plurality of wireless speaker systems enables, even when the plurality of wireless speaker systems belong to different networks, those wireless speaker systems to perform group reproduction of the audio data on the same tune. The media server also transmits the tune list to those plurality of wireless speaker systems. Then, each wireless speaker system displays the tune selection screen including the tune list received from the media server, and when a tune selection operation is received from the user, transmits the distribution request accompanied by specification of a tune specified in the tune selection operation to the media server. In response thereto, the media server ends the distribution of the audio data currently being simultaneously distributed, and simultaneously distributes the audio data on the tune specified in the distribution request to the plurality of wireless speaker systems. Therefore, the users of the plurality of wireless speakers can easily change the tune to be subjected to the group reproduction through the tune selection screen. In this manner, according to the present invention, it is possible to provide an audio reproduction technology which enables a plurality of wireless speakers belonging to different networks to perform group reproduction of audio data on the same tune, and which enables each of users of the plurality of wireless speakers to easily change the tune to be subjected to the group reproduction.

### Brief Description of Drawings

FIG. 1 is a schematic configuration diagram of an audio system according to a first embodiment of the present invention.
FIG. 2 is a sequence diagram for illustrating a key ID sharing operation between a plurality of wireless speaker systems (1).
FIG. 3 is a sequence diagram for illustrating a group reproduction operation performed by the plurality of wireless speaker systems (1).
FIG. 4 is a sequence diagram for illustrating the group reproduction operation performed by the plurality of wireless speaker systems (1), and is a continuation of FIG. 3.
FIG. 5 is a sequence diagram for illustrating a test operation for eliminating audio misalignment at a time of group reproduction performed by the plurality of wireless speaker systems (1).
FIG. 6 is a schematic functional configuration diagram of a wireless speaker (2).
FIG. 7 is a flow chart for illustrating the key ID sharing operation of the wireless speaker (2).
FIG. 8 is a flow chart for illustrating a group reproduction operation of the wireless speaker (2).
FIG. 9 is a flow chart for illustrating a test operation for eliminating audio misalignment at a time of group reproduction of the wireless speaker (2).
FIG. 10 is a schematic functional configuration diagram of a wireless terminal (3).
FIG. 11 is a flow chart for illustrating a key ID sharing operation of the wireless terminal (3).
FIG. 12 is a flow chart for illustrating a group reproduction operation of the wireless terminal (3).
FIG. 13 is a flow chart for illustrating a test operation for eliminating audio misalignment at a time of group reproduction of the wireless terminal (3).
FIG. 14 is a schematic functional configuration diagram of a media server (4).
FIG. 15 is a diagram for schematically illustrating an example of registered information of a group data storage unit (402).
FIG. 16 is a flow chart for illustrating an operation of the media server (4).
FIG. 17 is a sequence diagram for illustrating a key ID sharing operation between a plurality of wireless speaker systems (1').
FIG. 18 is a sequence diagram for illustrating a group reproduction operation performed by the plurality of wireless speaker systems (1').
FIG. 19 is a sequence diagram for illustrating the group reproduction operation performed by the plurality of wireless speaker systems (1'), and is a continuation of FIG. 18.
FIG. 20 is a sequence diagram for illustrating a test operation for eliminating audio misalignment at a time of group reproduction performed by the plurality of wireless speaker systems (1').
FIG. 21 is a schematic functional configuration diagram of a wireless terminal (3').
FIG. 22 is a flow chart for illustrating a key ID sharing operation of the wireless terminal (3').
FIG. 23 is a flow chart for illustrating a group reproduction operation of the wireless terminal (3').
FIG. 24 is a flow chart for illustrating a test operation for eliminating audio misalignment at a time of group reproduction of the wireless terminal (3').

### Description of Embodiments

Now, embodiments of the present invention are described.

### [First Embodiment]

First, a first embodiment of the present invention is described.

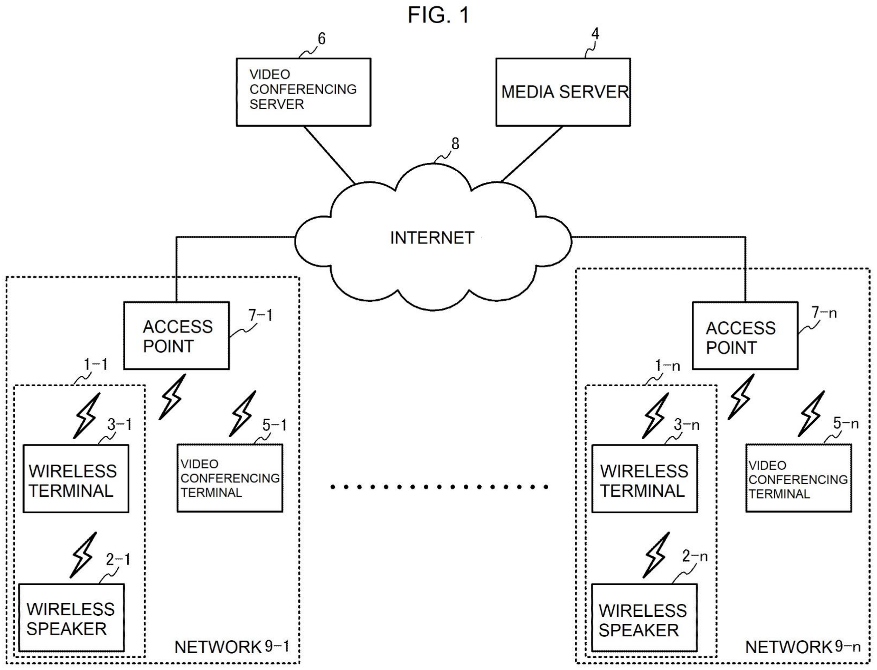

FIG. 1 is a schematic configuration diagram of an audio system according to this embodiment.

As illustrated in the figure, the audio system according to this embodiment includes a plurality of wireless speaker systems 1-1 to 1-n (in the following, may simply be referred to as "wireless speaker systems 1") and a media server 4.

The wireless speaker systems 1-1 to 1-n belong to different networks 9-1 to 9-n (in the following, may simply be referred to as "networks 9") together with video conferencing terminals 5-1 to 5-n (in the following, may simply be referred to as "video conferencing terminals 5"), respectively. The networks 9-1 to 9-n are connected to Internet 8 through access points 7-1 to 7-n (in the following, may simply be referred to as "access points 7"), respectively. The Internet 8 is connected to the media server 4 and a video conferencing server 6 that provides a video conferencing service to the video conferencing terminals 5-1 to 5-n.

The media server 4 simultaneously distributes audio data on the same tune to the wireless speaker systems 1-1 to 1-n that have accessed the media server 4 through use of the same key ID.

The wireless speaker systems 1-1 to 1-n include wireless speakers 2-1 to 2-n (in the following, may simply be referred to as "wireless speaker 2") and wireless terminals 3-1 to 3-n (in the following, may simply be referred to as "wireless terminals 3") each of which functions as a remote controller for the wireless speakers 2-1 to 2-n, respectively.

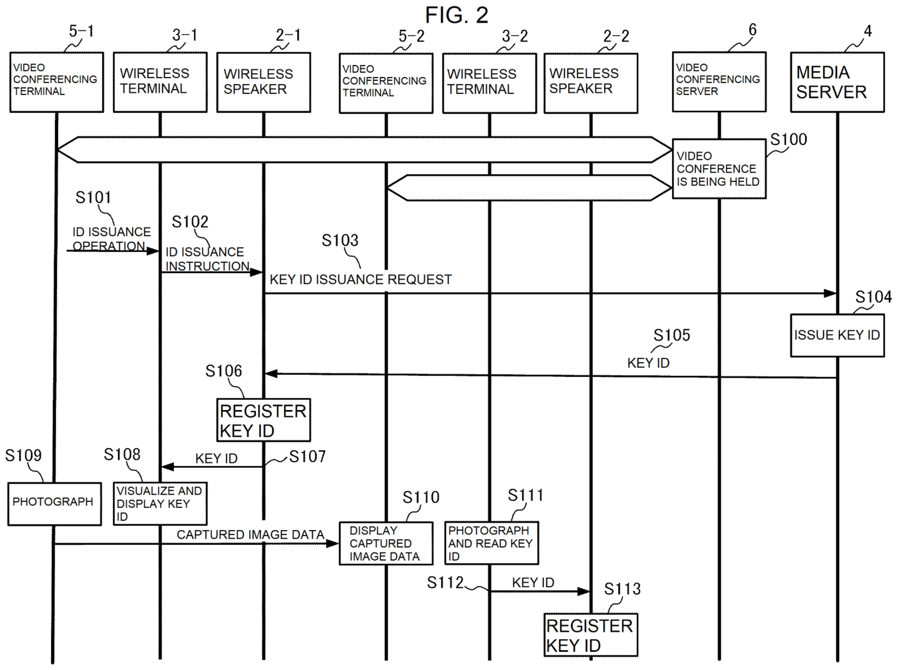

FIG. 2 is a sequence diagram for illustrating a key ID sharing operation between the plurality of wireless speaker systems 1.

Here, a case in which the key ID is shared between the wireless speaker system 1-1 and the wireless speaker system 1-2 is described as an example.

As a premise, it is assumed that the video conferencing terminal 5-1 and the video conferencing terminal 5-2 are engaged in a video conference through use of the video conferencing service provided by the video conferencing server 6 (Step S100), and that it has been determined through this video conference that a user of the video conferencing terminal 5-1 is to request the media server 4 to issue a key ID for forming a group.

First, when the wireless terminal 3-1 receives a key ID issuance operation from the user (Step S101), the wireless terminal 3-1 transmits a key ID issuance instruction to the wireless speaker 2-1 (Step S102). In response thereto, the wireless speaker 2-1 transmits a key ID issuance request to the media server 4 (Step S103).

Subsequently, when the media server 4 receives the key ID issuance request from the wireless speaker 2-1, the media server 4 issues a key ID for forming a group with the plurality of wireless speaker systems 1 (Step S104), and transmits the issued key ID to the wireless speaker 2-1 (Step S105).

Subsequently, when the wireless speaker 2-1 receives the key ID from the media server 4, the wireless speaker 2-1 registers this key ID therein (Step S106), and transmits this key ID to the wireless terminal 3-1 (Step S107).

In response thereto, the wireless terminal 3-1 visualizes the key ID received from the wireless speaker 2-1 as a character string, a two-dimensional code, or the like, and displays the key ID on a screen (Step S108). When the user of the wireless terminal 3-1 points the screen of the wireless terminal 3-1 toward a camera of the video conferencing terminal 5-1, the video conferencing terminal 5-1 photographs the visualized key ID displayed on the screen of the wireless terminal 3-1, and transmits the captured image data to the video conferencing terminal 5-2 that is engaged in the video conference with the video conferencing terminal 5-1 (Step S109). In this manner, the visualized key ID is displayed on a screen of the video conferencing terminal 5-2 (Step S110).

Subsequently, when a user of the wireless terminal 3-2 uses a camera of the wireless terminal 3-2 to photograph the visualized key ID displayed on the screen of the video conferencing terminal 5-2, the wireless terminal 3-2 reads the key ID from a captured image (Step S111), and transmits the key ID to the wireless speaker 2-2 (Step S112). Then, the wireless speaker 2-2 registers therein the key ID received from the wireless terminal 3-2 (Step S113).

In the above-mentioned manner, the key ID is shared between the wireless speaker system 1-1 and the wireless speaker system 1-2.

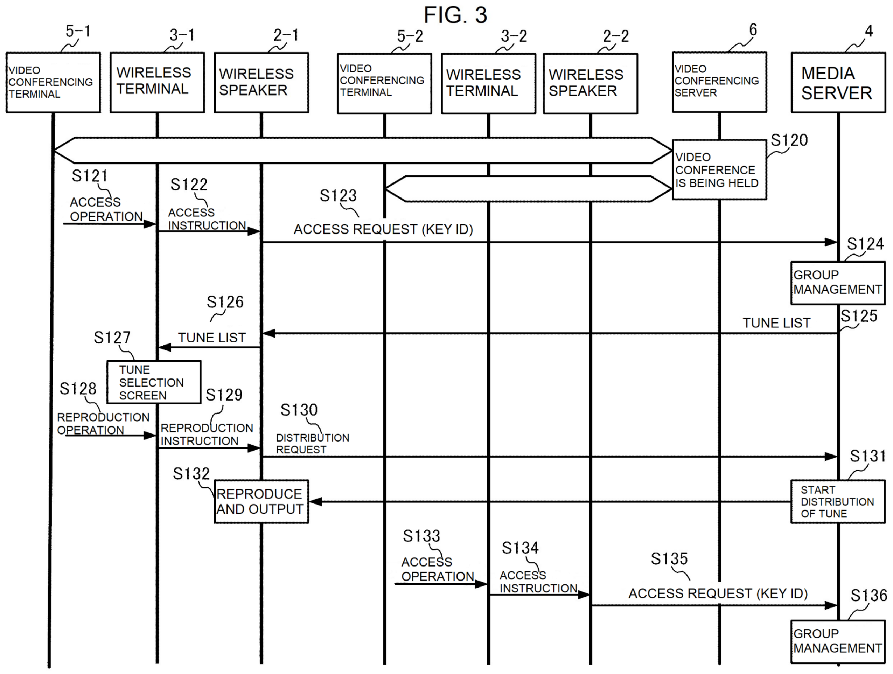

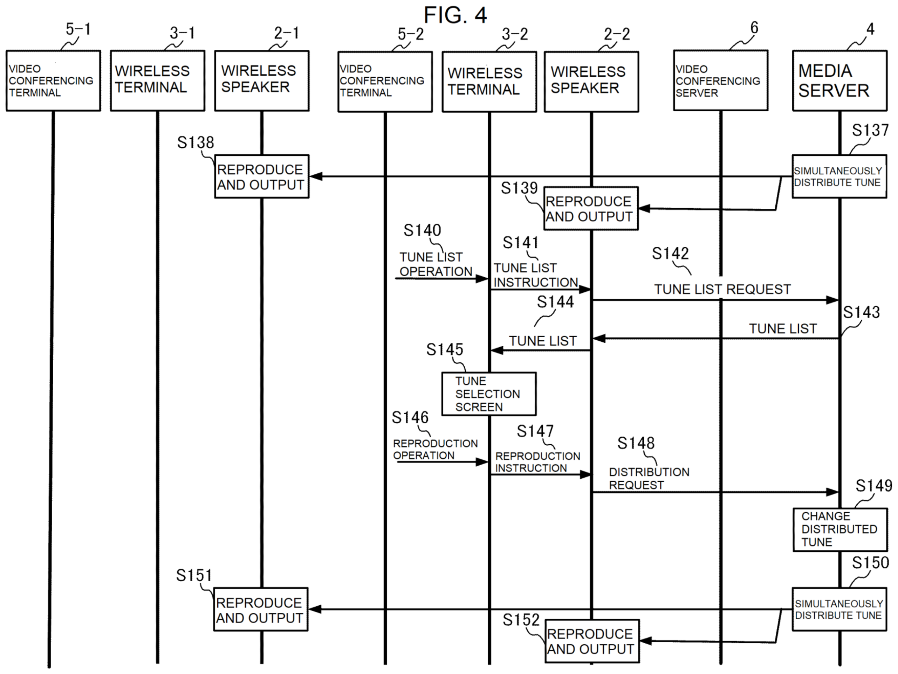

FIG. 3 and FIG. 4 are sequence diagrams for illustrating a group reproduction operation performed by the plurality of wireless speaker systems 1.

Here, a case in which the group reproduction is performed by the wireless speaker system 1-1 and the wireless speaker system 1-2 is described as an example.

As a premise, it is assumed that the video conferencing terminal 5-1 and the video conferencing terminal 5-2 are engaged in a video conference through use of the video conferencing service provided by the video conferencing server 6 (Step S120).

First, when the wireless terminal 3-1 receives an operation for accessing the media server 4 from the user (Step S121), the wireless terminal 3-1 transmits an instruction to access the media server 4 to the wireless speaker 2-1 (Step S122). In response thereto, the wireless speaker 2-1 transmits an access request accompanied by the key ID shared with the wireless speaker 2-2 (Step S123).

Subsequently, when the media server 4 receives the access request from the wireless speaker 2-1, the media server 4 performs group management on the wireless speaker 2-1 in association with the key ID specified in this access request (Step S124). The media server 4 also confirms that distribution of a tune to the wireless speaker 2 associated with this key ID has not yet been carried out, and transmits a tune list to the wireless speaker 2-1 (Step S125).

Subsequently, the wireless speaker 2-1 transmits the tune list received from the media server 4 to the wireless terminal 3-1 (Step S126). In response thereto, the wireless terminal 3-1 displays a tune selection screen including the tune list received from the wireless speaker 2-1 (Step S127), and receives a reproduction operation accompanied by tune selection from the user (Step S128). Then, the wireless terminal 3-1 transmits, to the wireless speaker 2-1, a reproduction instruction accompanied by specification of the tune selected by the reproduction operation (Step S129). In response thereto, the wireless speaker 2-1 transmits, to the media server 4, a distribution request accompanied by the specification of a tune specified in the reproduction instruction (Step S130).

When the media server 4 receives the distribution request from the wireless speaker 2-1, the media server 4 associates the tune specified in the distribution request with the key ID with which the wireless speaker 2-1 is associated, and also starts distribution of this tune (Step S131). In response thereto, the wireless speaker 2-1 reproduces and outputs the audio data on the tune distributed by the media server 4 (Step S132).

Then, when the wireless terminal 3-2 receives an operation for accessing the media server 4 from the user (Step S133), the wireless terminal 3-2 transmits an instruction to access the media server 4 to the wireless speaker 2-2 (Step S134). In response thereto, the wireless speaker 2-2 transmits an access request accompanied by the key ID shared with the wireless speaker 2-1 (Step S135).

Subsequently, when the media server 4 receives the access request from the wireless speaker 2-2, the media server 4 performs the group management on the wireless speaker 2-2 in association with the key ID specified in this access request together with the wireless speaker 2-1 (Step S136).

The media server 4 also confirms that distribution to the wireless speaker 2-1 associated with this key ID is being carried out, and simultaneously distributes the tune, which is being distributed, to the wireless speaker 2-2 in addition to the wireless speaker 2-1 (Step S137). In response thereto, the wireless speaker 2-1 and the wireless speaker 2-2 perform group reproduction and output of the audio data on the tune simultaneously distributed by the media server 4 (Step S138 and Step S139).

In this manner, users of the wireless speaker systems 1-1 and 1-2 can simultaneously listen to the same tune while holding the video conference through use of the video conferencing terminals 5-1 and 5-2, respectively.

Subsequently, when the wireless terminal 3-2 receives a tune list operation from the user (Step S140), the wireless terminal 3-2 transmits a tune list instruction to the wireless speaker 2-2 (Step S141). In response thereto, the wireless speaker 2-2 transmits a tune list request (Step S142).

Subsequently, when the media server 4 receives the tune list request from the wireless speaker 2-2, the media server 4 transmits the tune list to the wireless speaker 2-2 (Step S143).

Subsequently, the wireless speaker 2-2 transmits the tune list received from the media server 4 to the wireless terminal 3-2 (Step S144). In response thereto, the wireless terminal 3-2 displays a tune selection screen including the tune list received from the wireless speaker 2-2 (Step S145), and receives a reproduction operation accompanied by tune selection from the user (Step S146). Then, the wireless terminal 3-2 transmits, to the wireless speaker 2-2, a reproduction instruction accompanied by specification of the tune selected by the reproduction operation (Step S147). In response thereto, the wireless speaker 2-2 transmits, to the media server 4, a distribution request accompanied by the specification of a tune specified in the reproduction instruction (Step S148).

When the media server 4 receives the distribution request from the wireless speaker 2-2, the media server 4 changes the tune associated with the key ID with which the wireless speaker 2-2 is associated to a tune specified in this distribution request (Step S149), and simultaneously distributes the tune specified in this distribution request to the wireless speaker 2-1 and the wireless speaker 2-2 associated with this key ID (Step S150). In response thereto, the wireless speaker 2-1 and the wireless speaker 2-2 perform group reproduction and output of the audio data on the tune simultaneously distributed by the media server 4 (Step S151 and Step S152).

In this manner, the users of the wireless speaker systems 1-1 and 1-2 can freely change the tune to be simultaneously distributed to those wireless speaker systems 1-1 and 1-2, respectively.

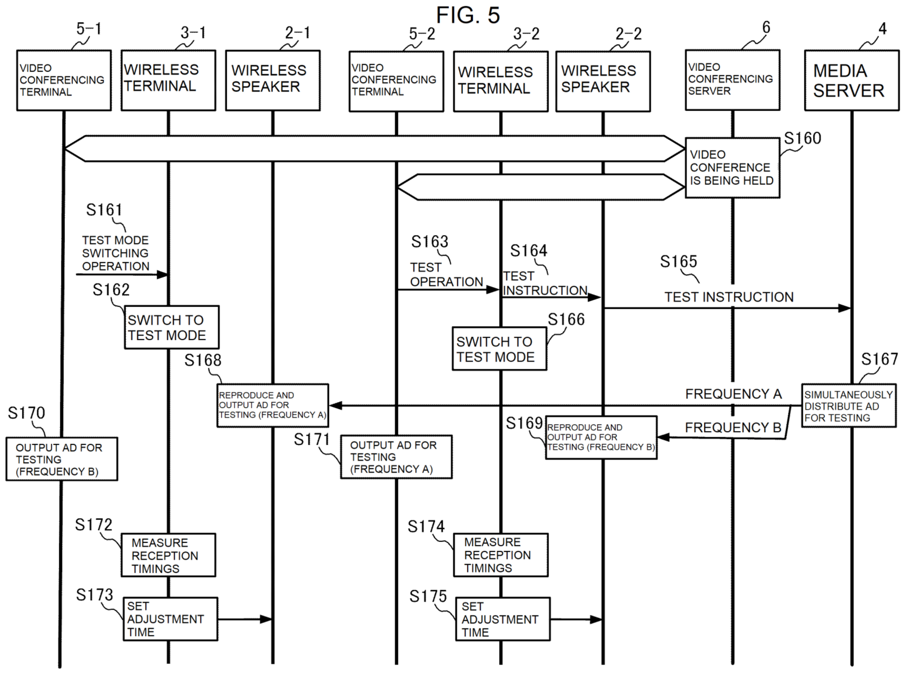

FIG. 5 is a sequence diagram for illustrating a test operation for eliminating audio misalignment at a time of group reproduction performed by the plurality of wireless speaker systems 1.

Here, a test operation for eliminating audio misalignment when the group reproduction is performed by the wireless speaker system 1-1 and the wireless speaker system 1-2 is described as an example.

It is assumed that the wireless speaker system 1-1 and the wireless speaker system 1-2 have already been associated with the same key ID and subjected to the group management in the media server 4.

As a premise, it is assumed that the video conferencing terminal 5-1 and the video conferencing terminal 5-2 are engaged in a video conference through use of the video conferencing service provided by the video conferencing server 6 (Step S160), and that it has been determined through this conference that the user of the wireless speaker system 1-2 is to instruct the media server 4 to perform a test.

First, when the wireless terminal 3-1 receives a switching operation for switching to a test mode from the user (Step S161), the wireless terminal 3-1 switches its own operation mode from a normal mode to the test mode (Step S162).

Subsequently, when the wireless terminal 3-2 receives a test operation from the user (Step S163), the wireless terminal 3-2 transmits a test instruction to the wireless speaker 2-2 (Step S164). In response thereto, the wireless speaker 2-2 transmits the test instruction to the media server 4 (Step S165) . Further, the wireless terminal 3-2 switches its own operation mode from the normal mode to the test mode (Step S166).

When the media server 4 receives the test instruction from the wireless speaker 2-2, the media server 4 simultaneously distributes pieces of audio data for testing which differ only in frequency (frequency range) to this wireless speaker 2-2 and the wireless speaker 2-1 that is subjected to the group management with this wireless speaker 2-2 (the wireless speaker 2-1 that is associated with the key ID with which the wireless speaker 2-2 is associated) (Step S167). Here, audio data for testing having a frequency A and audio data for testing having a frequency B are simultaneously distributed to the wireless speaker 2-1 and the wireless speaker 2-2, respectively.

The wireless speaker 2-1 reproduces and outputs the audio data for testing having the frequency A which has been received from the media server 4 (Step S168), and the wireless speaker 2-2 reproduces and outputs the audio data for testing having the frequency B which has been received from the media server 4 (Step S169). Then, the audio data for testing having the frequency B which has been reproduced by and output from the wireless speaker 2-2 is collected by a microphone of the video conferencing terminal 5-2 and output from the video conferencing terminal 5-1 through the video conferencing (Step S170), and the audio data for testing having the frequency A which has been reproduced by and output from the wireless speaker 2-1 is collected by a microphone of the video conferencing terminal 5-1 and output from the video conferencing terminal 5-2 through the video conferencing (Step S171).

The wireless terminal 3-1 collects the audio data for testing having the frequency A which has been output from the wireless speaker 2-1 by a microphone to measure a reception timing thereof, and also collects the audio data for testing having the frequency B which has been output from the wireless speaker 2-2 through the video conferencing terminal 5-1 by the microphone to measure a reception timing thereof (Step S172). Then, the wireless terminal 3-1 sets, as a reference timing, the latest reception timing among the reception timing of the audio data for testing having the frequency A which has been output from the wireless speaker 2-1 and the reception timing of the audio data for testing having the frequency B which has been output from the wireless speaker 2-2 through the video conferencing terminal 5-1, and calculates a difference between the reference timing and the audio data for testing having the frequency A which has been output from the wireless speaker 2-1. Then, the calculated difference is set in the wireless speaker 2-1 as a delay time (Step S173). In this manner, the wireless speaker 2-1 reproduces and outputs the audio data on the tune received from the media server 4 after a delay of the delay time set by the wireless terminal 3-1.

Similarly, the wireless terminal 3-2 collects the audio data for testing having the frequency B which has been output from the wireless speaker 2-2 by a microphone to measure a reception timing thereof, and also collects the audio data for testing having the frequency A which has been output from the wireless speaker 2-1 through the video conferencing terminal 5-2 by the microphone to measure a reception timing thereof (Step S174). Then, the wireless terminal 3-2 sets, as a reference timing, the latest reception timing among the reception timing of the audio data for testing having the frequency B which has been output from the wireless speaker 2-2 and the reception timing of the audio data for testing having the frequency A which has been output from the wireless speaker 2-1 through the video conferencing terminal 5-2, and calculates a difference between the reference timing and the audio data for testing having the frequency B which has been output from the wireless speaker 2-2. Then, the calculated difference is set in the wireless speaker 2-2 as a delay time (Step S175). In this manner, the wireless speaker 2-2 reproduces and outputs the audio data on the tune received from the media server 4 after a delay of the delay time set by the wireless terminal 3-2.

Next, the wireless speaker system 1 and the media server 4 that form the audio system according to this embodiment are described in detail.

An existing video conferencing system can be used as a video conferencing system formed of the plurality of video conferencing terminals 5 and the video conferencing server 6, and hence detailed description thereof is omitted.

First, the wireless speaker system 1 is described.

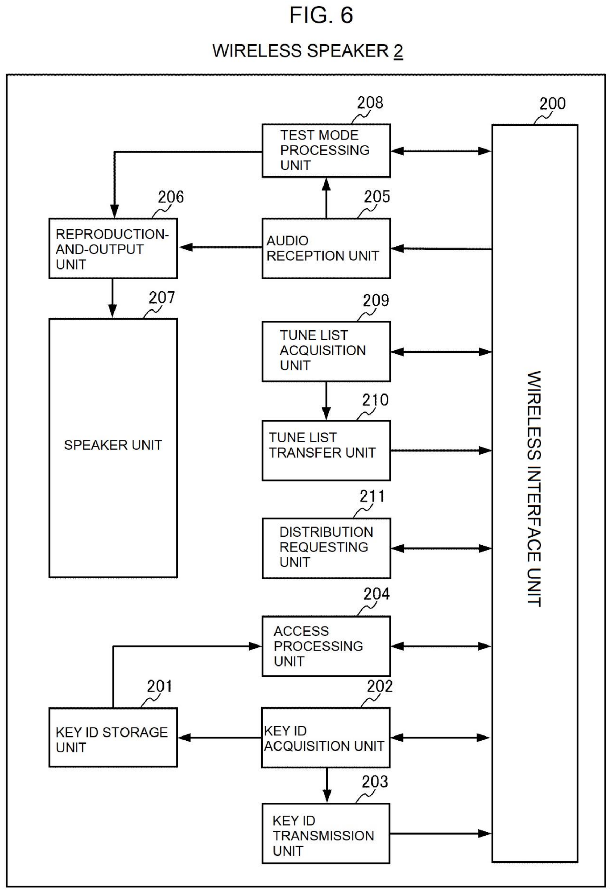

FIG. 6 is a schematic functional configuration diagram of the wireless speaker 2.

As illustrated in the figure, the wireless speaker 2 includes a wireless interface unit 200, a key ID storage unit 201, a key ID acquisition unit 202, a key ID transmission unit 203, an access processing unit 204, an audio reception unit 205, a reproduction-and-output unit 206, a speaker unit 207, a test mode processing unit 208, a tune list acquisition unit 209, a tune list transfer unit 210, and a distribution requesting unit 211.

The wireless interface unit 200 is an interface for establishing connection to the access point 7.

The key ID storage unit 201 stores a key ID for forming a group among the plurality of wireless speaker systems 1 including this wireless speaker system 1.

The key ID acquisition unit 202 transmits a key ID issuance request to the media server 4 in accordance with an ID issuance instruction received from the wireless terminal (hereinafter referred to as "paired terminal") 3 that forms the wireless speaker system 1 together with the own wireless speaker 2, acquires a key ID from the media server 4, stores the acquired key ID in the key ID storage unit 201, and also notifies the key ID to the key ID transmission unit 203. As another example, the key ID is received from the paired terminal 3, and stored in the key ID storage unit 201.

The key ID transmission unit 203 transmits, to the paired terminal 3, the key ID notified by the key ID acquisition unit 202.

The access processing unit 204 transmits, in accordance with an access instruction received from the paired terminal 3, an access request accompanied by the key ID stored in the key ID storage unit 201 to the media server 4, and connects to the media server 4.

The audio reception unit 205 receives audio data distributed from the media server 4.

The reproduction-and-output unit 206 delays the audio data received by the audio reception unit 205 in accordance with a delay time set by the test mode processing unit 208, and then reproduces and outputs the delayed audio data.

The speaker unit 207 outputs, as a sound, the reproduced data output from the reproduction-and-output unit 206.

When the test mode processing unit 208 receives a test instruction from the paired terminal 3, the test mode processing unit 208 transmits the test instruction to the media server 4, and also clears the delay time set in the reproduction-and-output unit 206 to cause the own wireless speaker to transition to the test mode. Further, when the test mode processing unit 208 receives a test mode switching instruction from the paired terminal 3, the test mode processing unit 208 clears the delay time set in the reproduction-and-output unit 206 to cause the own wireless speaker to transition to the test mode. Further, during the test mode, the test mode processing unit 208 receives a delay time from the paired terminal 3, and sets the delay time in the reproduction-and-output unit 206.

The tune list acquisition unit 209 receives a tune list from the media server 4, and notifies the tune list to the tune list transfer unit 210. Further, the tune list acquisition unit 209 transmits a tune list request to the media server 4 in accordance with a tune list instruction received from the paired terminal 3.

The tune list transfer unit 210 transmits the tune list notified by the tune list acquisition unit 209 to the paired terminal 3.

The distribution requesting unit 211 transmits, in accordance with a reproduction instruction received from the paired terminal 3, a distribution request accompanied by the specification of a tune specified by this reproduction instruction to the media server 4.

The functional configuration of the wireless speaker 2 illustrated in FIG. 6 may be implemented by hardware through use of an integrated logic IC such as an application specific integrated circuit (ASIC) or a field programmable gate array (FPGA), or may be implemented by software with use of a computer such as a digital signal processor (DSP). As another example, the functional configuration may be implemented as a process on a general computer, such as a personal computer (PC), including a central processing unit (CPU), a memory, an auxiliary storage device such as a flash memory or a hard disk drive, and a wireless communication device such as a wireless LAN adapter, by the CPU loading a predetermined program into the memory from the auxiliary storage device and executing the program.

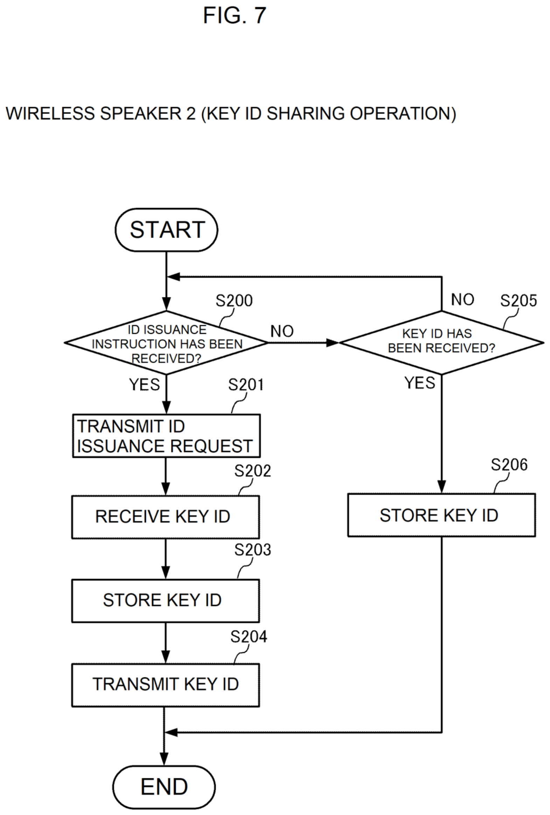

FIG. 7 is a flow chart for illustrating the key ID sharing operation of the wireless speaker 2.

When the key ID acquisition unit 202 receives an ID issuance instruction from the paired terminal 3 through the wireless interface unit 200 ("YES" in Step S200), the key ID acquisition unit 202 transmits a key ID issuance request to the media server 4 through the wireless interface unit 200 (Step S201), and receives a key ID from the media server 4 (Step S202). Then, the key ID acquisition unit 202 stores the received key ID in the key ID storage unit 201 (Step S203), and also notifies the key ID to the key ID transmission unit 203. In response thereto, the key ID transmission unit 203 transmits the key ID notified by the key ID acquisition unit 202 to the paired terminal 3 through the wireless interface unit 200 (Step S204).

Further, when the key ID acquisition unit 202 receives a key ID from the paired terminal 3 through the wireless interface unit 200 ("YES" in Step S205), the key ID acquisition unit 202 stores the received key ID in the key ID storage unit 201 (Step S206).

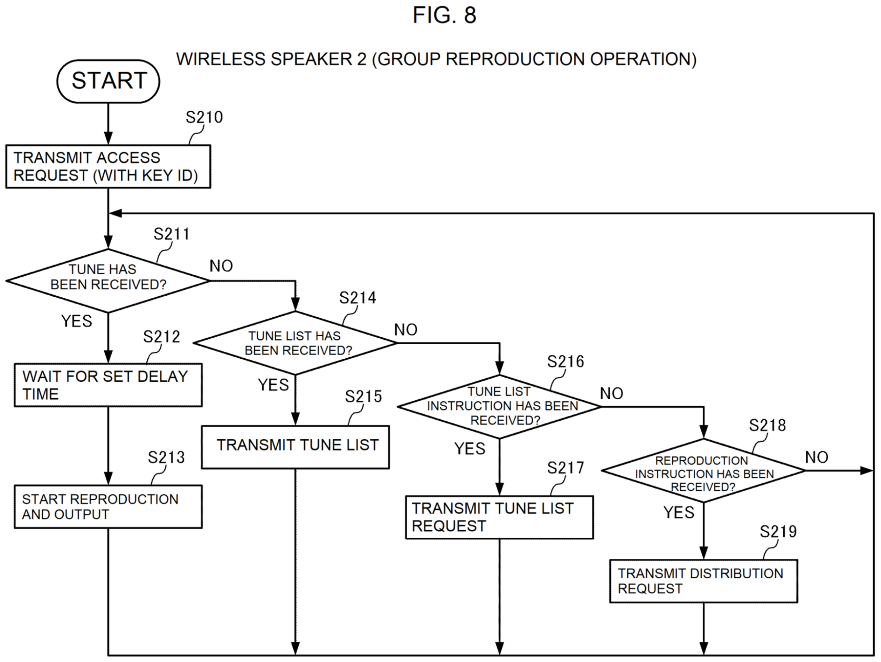

FIG. 8 is a flow chart for illustrating a group reproduction operation of the wireless speaker 2.

This flow is started when the access processing unit 204 receives an access instruction from the paired terminal 3 through the wireless network interface unit 200.

First, the access processing unit 204 transmits an access request accompanied by the key ID stored in the key ID storage unit 201 to the media server 4 through the wireless network interface unit 200 (Step S210).

Subsequently, when the audio reception unit 205 receives audio data on a tune distributed from the media server 4 through the wireless network interface unit 200 ("YES" in Step S211), the audio reception unit 205 passes this audio data on the tune to the reproduction-and-output unit 206. In response thereto, the reproduction-and-output unit 206 waits for the delay time set by the test mode processing unit 208 to elapse (Step S212), then starts to reproduce the audio data on the tune, and outputs the reproduced data from the speaker unit 207 (Step S213).

Further, when the tune list acquisition unit 209 receives a tune list from the media server 4 through the wireless network interface unit 200 ("YES" in Step S214), the tune list acquisition unit 209 passes this tune list to the tune list transfer unit 210. In response thereto, the tune list transfer unit 210 transmits the tune list to the paired terminal 3 through the wireless network interface unit 200 (Step S215).

Further, when the tune list acquisition unit 209 receives a tune list instruction from the paired terminal 3 through the wireless network interface unit 200 ("YES" in Step S216), the tune list acquisition unit 209 transmits a tune list request to the media server 4 through the wireless network interface unit 200 (Step S217).

Further, when the distribution requesting unit 211 receives a reproduction instruction from the paired terminal 3 through the wireless network interface unit 200 ("YES" in Step S218), the distribution requesting unit 211 transmits a distribution request accompanied by the specification of a tune specified in the reproduction instruction to the media server 4 through the wireless network interface unit 200 (Step S219).

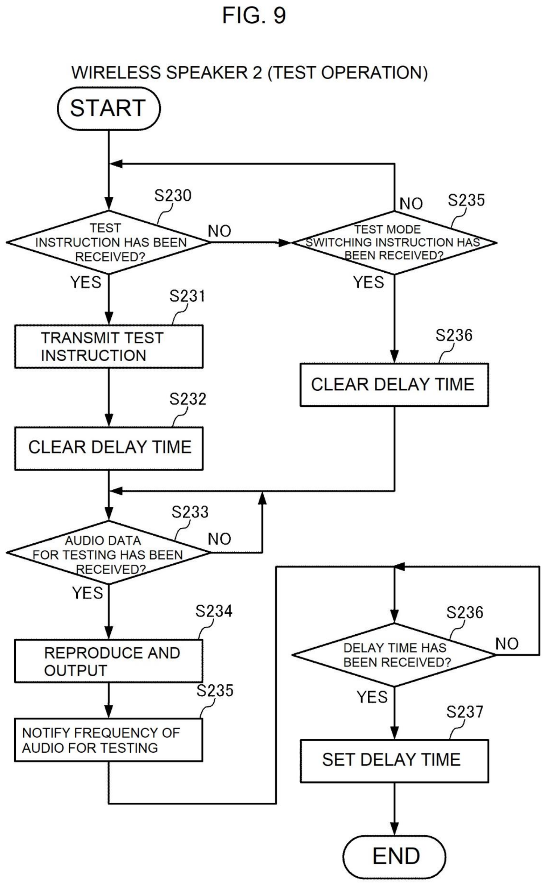

FIG. 9 is a flow chart for illustrating a test operation for eliminating audio misalignment at a time of group reproduction of the wireless speaker 2.

When the test mode processing unit 208 receives a test instruction from the paired terminal 3 through the wireless interface unit 200 ("YES" in Step S230), the test mode processing unit 208 transmits the test instruction to the media server 4 through the wireless interface unit 200 (Step S231). Then, the test mode processing unit 208 clears the delay time set in the reproduction-and-output unit 206 (Step S232). After that, the process proceeds to Step S233.

Further, when the test mode processing unit 208 receives a test mode switching instruction from the paired terminal 3 through the wireless interface unit 200 ("YES" in Step S235), the test mode processing unit 208 clears the delay time set in the reproduction-and-output unit 206 (Step S236). After that, the process proceeds to Step S233.

In Step S233, when the audio reception unit 205 receives audio data for testing from the media server 4 through the wireless interface unit 200 ("YES" in Step S233), the audio reception unit 205 outputs this audio data for testing to the reproduction-and-output unit 206. In response thereto, the reproduction-and-output unit 206 reproduces the audio data for testing, and outputs the reproduced data from the speaker unit 207 (Step S234). Further, the test mode processing unit 208 identifies the frequency of the audio data for testing from attribute information added to the audio data for testing, and notifies the identified frequency of the audio data for testing to the paired terminal 3 through the wireless interface unit 200 (Step S235).

After that, when the test mode processing unit 208 receives a delay time from the paired terminal 3 through the wireless interface unit 200 ("YES" in Step S236), the test mode processing unit 208 sets this delay time in the reproduction-and-output unit 206 (Step S237).

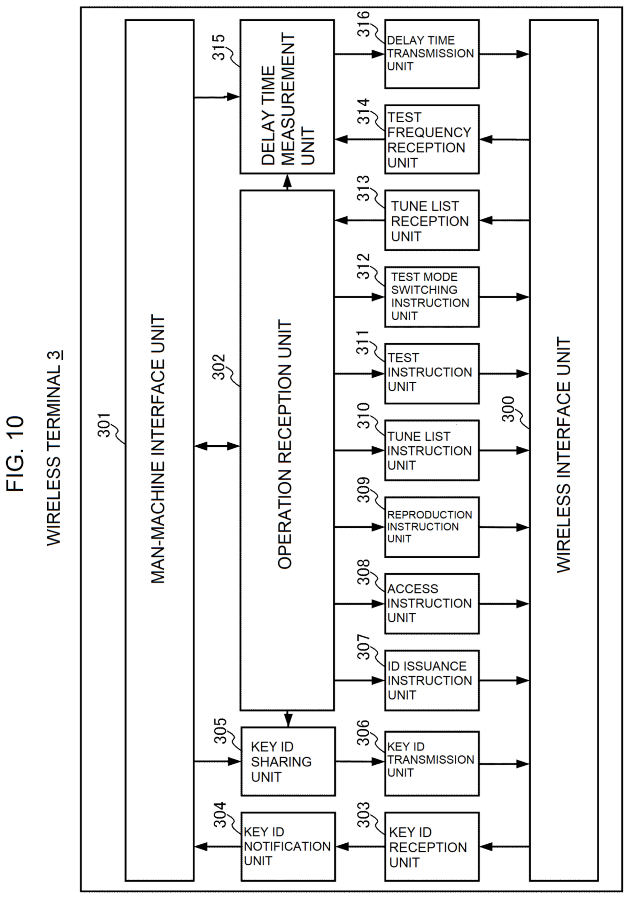

FIG. 10 is a schematic functional configuration diagram of the wireless terminal 3.

As illustrated in the figure, the wireless terminal 3 includes a wireless interface unit 300, a man-machine interface unit 301, an operation reception unit 302, a key ID reception unit 303, a key ID notification unit 304, a key ID sharing unit 305, a key ID transmission unit 306, an ID issuance instruction unit 307, an access instruction unit 308, a reproduction instruction unit 309, a tune list instruction unit 310, a test instruction unit 311, a test mode switching instruction unit 312, a tune list reception unit 313, a test frequency reception unit 314, a delay time measurement unit 315, and a delay time transmission unit 316.

The wireless interface unit 300 is an interface for establishing connection to the access point 7.

The man-machine interface unit 301 is an interface for displaying information to the user and for receiving various operations from the user, and includes an input/output device, such as a display with a touch sensor, as well as a microphone and a camera.

The operation reception unit 302 receives various operations from the user through the man-machine interface unit 301. Further, the operation reception unit 302 displays a tune selection screen for receiving a reproduction operation on the man-machine interface unit 301 in accordance with a tune list received from the tune list reception unit 313.

The key ID reception unit 303 receives a key ID from the wireless speaker 2 (hereinafter also referred to as "paired speaker 2") that forms the wireless speaker system 1 together with the own wireless terminal 3 through the wireless interface unit 300.

The key ID notification unit 304 visualizes the key ID received by the key ID reception unit 303 as a character string, a two-dimensional code, or the like, and displays the key ID on the man-machine interface unit 301.

The key ID sharing unit 305 reads the visualized key ID from screen data of another wireless terminal 3 displayed on the video conferencing terminal 5 belonging to the same network 9 as that of the own wireless terminal 3, an image of which has been picked up by the camera of the man-machine interface unit 301. In this manner, the key ID is shared with the other wireless terminal 3.

The key ID transmission unit 306 transmits the key ID shared with the other wireless terminal 3 by the key ID sharing unit 305 to the paired speakers 2 through the wireless interface unit 300.

The ID issuance instruction unit 307 transmits an ID issuance instruction to the paired speaker 2 through the wireless interface unit 300 in accordance with an instruction from the operation reception unit 302.

The access instruction unit 308 transmits an access instruction to the paired speaker 2 through the wireless interface unit 300 in accordance with an instruction from the operation reception unit 302.

The reproduction instruction unit 309 transmits a reproduction instruction accompanied by the specification of a tune to the paired speaker 2 through the wireless interface unit 300 in accordance with an instruction from the operation reception unit 302.

The tune list instruction unit 310 transmits a tune list instruction to the paired speaker 2 through the wireless interface unit 300 in accordance with an instruction from the operation reception unit 302.

The test instruction unit 311 transmits a test instruction to the paired speaker 2 through the wireless interface unit 300 in accordance with an instruction from the operation reception unit 302.

The test mode switching instruction unit 312 transmits a test mode switching instruction to the paired speaker 2 through the wireless interface unit 300 in accordance with an instruction from the operation reception unit 302.

The tune list reception unit 313 receives a tune list from the paired speaker 2 through the wireless interface unit 300, and passes the tune list to the operation reception unit 302.

The test frequency reception unit 314 receives, from the paired speaker 2 through the wireless interface unit 300, the frequency of the audio data for testing which is reproduced by and output from the paired speaker 2, and passes the frequency to the delay time measurement unit 315.

The delay time measurement unit 315 extracts, from collected sound data of the microphone of the man-machine interface unit 301, the audio data for testing which has been reproduced by and output from the paired speaker 2 (the audio data for testing having the frequency notified by the test frequency reception unit 314) and pieces of audio data for testing having different frequencies each of which has been output from the video conferencing terminal 5 belonging to the same network 9 as that of the own wireless terminal 3, and measures the reception timing of each thereof. Then, the delay time measurement unit 315 sets, as the reference timing, the latest reception timing among the reception timing of the audio data for testing which has been reproduced by and output from the paired speaker 2 and the reception timings of the pieces of audio data for testing each of which has been output from the video conferencing terminal 5 belonging to the same network 9 as that of the own wireless terminal 3, and measures the difference between the reference timing and the reception timing of the audio data for testing output from the paired speaker 2 as the delay time.

The delay time transmission unit 316 transmits the delay time measured by the delay time measurement unit 315 to the paired speaker 2.

In the same manner as the functional configuration of the wireless speaker 2 illustrated in FIG. 6, the functional configuration of the wireless terminal 3 illustrated in FIG. 10 may be implemented by hardware through use of an integrated logic IC such as an ASIC or an FPGA, or may be implemented by software through use of a computer such as a DSP. As another example, the functional configuration may be implemented as a process on a portable computer, such as a smartphone or a tablet PC, including a CPU, a memory, an auxiliary storage device such as a flash memory, and a wireless communication device such as a wireless LAN adapter, by the CPU loading a predetermined program into the memory from the auxiliary storage device and executing the program.

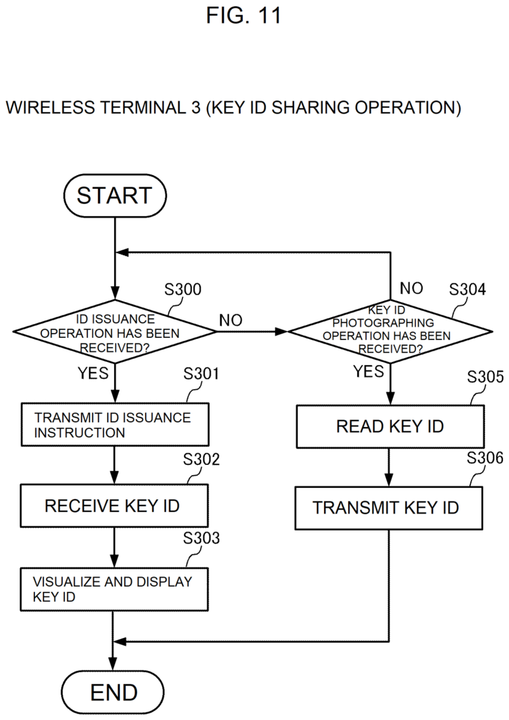

FIG. 11 is a flow chart for illustrating a key ID sharing operation of the wireless terminal 3.

When the operation reception unit 302 receives an ID issuance operation from the user through the man-machine interface unit 301 ("YES" in Step S300), the operation reception unit 302 instructs the ID issuance instruction unit 307 to issue an ID. In response thereto, the ID issuance instruction unit 307 transmits an ID issuance instruction to the paired speaker 2 through the wireless interface unit 300 (Step S301).

Subsequently, the key ID reception unit 303 receives the key ID from the paired speaker 2 through the wireless interface unit 300 (Step S302), and passes this key ID to the key ID notification unit 304. In response thereto, the key ID notification unit 304 visualizes the key ID received from the key ID reception unit 303 as a character string, a two-dimensional code, or the like, and displays the key ID on the man-machine interface unit 301 (Step S303).

Further, when the operation reception unit 302 receives an operation for photographing the key ID from the user through the man-machine interface unit 301 ("YES" in Step S304), the operation reception unit 302 instructs the key ID sharing unit 305 to read the key ID. In response thereto, the key ID sharing unit 305 uses the camera of the man-machine interface unit 301 to photograph the visualized key ID displayed on the screen of the other wireless terminal 3, which has been displayed on the video conferencing terminal 5 belonging to the same network 9 as that of the own wireless terminal 3, reads the key ID from this captured image (Step S305), and notifies the key ID to the key ID transmission unit 306. Then, the key ID transmission unit 306 transmits the key ID received from the key ID sharing unit 305 to the paired speaker 2 through the wireless interface unit 300 (Step S306).

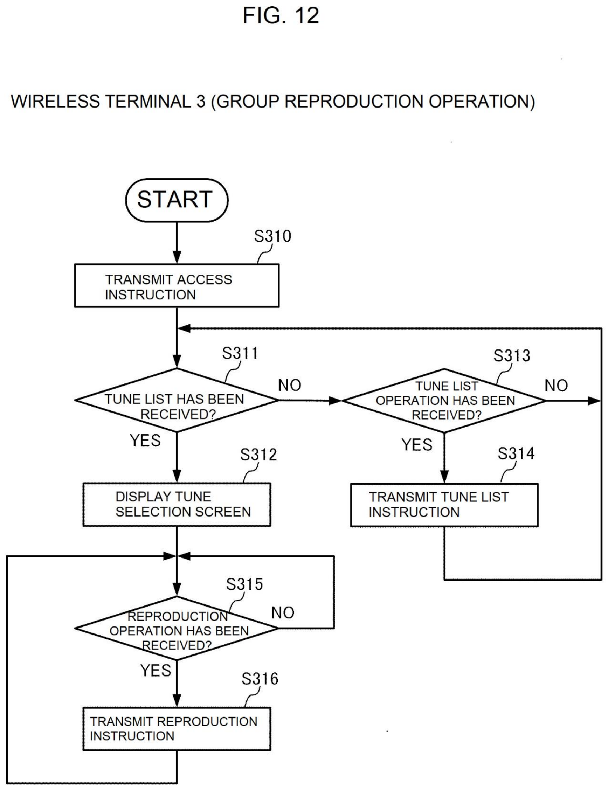

FIG. 12 is a flow chart for illustrating a group reproduction operation of the wireless terminal 3.

This flow is started when the operation reception unit 302 receives an access operation from the user through the man-machine interface unit 301.

First, the operation reception unit 302 notifies an access instruction to the access instruction unit 308. In response thereto, the access instruction unit 308 transmits the access instruction to the paired speaker 2 through the wireless interface unit 300 (Step S310).

Subsequently, when the tune list reception unit 313 receives a tune list from the paired speaker 2 through the wireless interface unit 300 ("YES" in Step S311), the tune list reception unit 313 passes the received tune list to the operation reception unit 302. In response thereto, the operation reception unit 302 displays, on the man-machine interface unit 301, a tune selection screen for selecting a desired tune from the tune list and instructing reproduction thereof (step S312), and waits for the user to perform a reproduction operation (Step S315).

Further, when the operation reception unit 302 receives a tune list operation from the user through the man-machine interface unit 301 ("YES" in Step S313), the operation reception unit 302 notifies a tune list instruction to the tune list instruction unit 310. In response thereto, the tune list instruction unit 310 transmits the tune list instruction to the paired speaker 2 through the wireless interface unit 300 (Step S314). After that, the wireless terminal 3 waits for the tune list to be sent from the paired speaker 2 (Step S311).

In Step S315, when the operation reception unit 302 receives a reproduction operation from the user through the tune selection screen displayed on the man-machine interface unit 301 ("YES" in Step S315), the operation reception unit 302 notifies a tune specified in this reproduction operation to the reproduction instruction unit 309. In response thereto, the reproduction instruction unit 309 transmits a reproduction instruction accompanied by the specification of the tune notified by the operation reception unit 302 to the paired speaker 2 through the wireless interface unit 300 (Step S316).

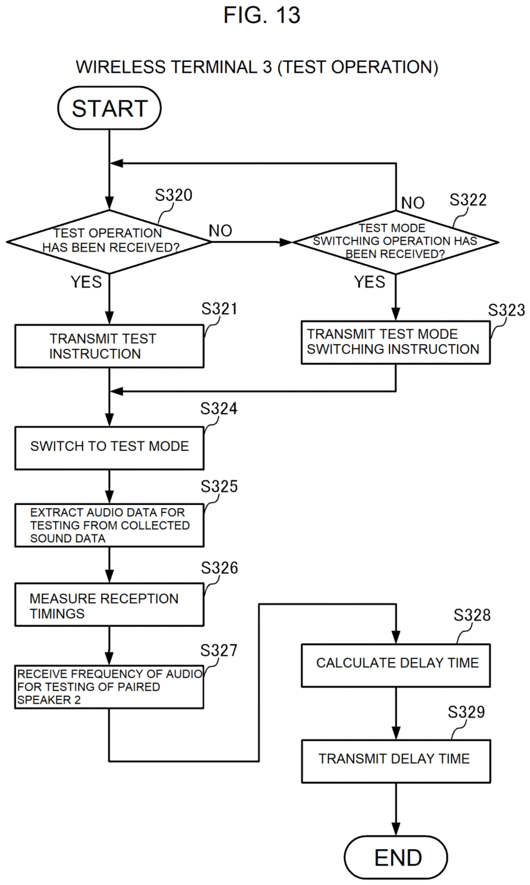

FIG. 13 is a flow chart for illustrating a test operation for eliminating audio misalignment at a time of group reproduction of the wireless terminal 3.

When the operation reception unit 302 receives a test operation from the user through the man-machine interface unit 301 ("YES" in Step S320), the operation reception unit 302 notifies a test instruction to the test instruction unit 311. In response thereto, the test instruction unit 311 transmits the test instruction to the paired speaker 2 through the wireless interface unit 300 (Step S321). Then, the operation reception unit 302 switches the own wireless terminal 3 to the test mode (Step S324).

Further, when the operation reception unit 302 receives a test mode switching operation from the user through the man-machine interface unit 301 ("YES" in Step S322), the operation reception unit 302 notifies the test mode switching instruction to the test mode switching instruction unit 312. In response thereto, the test mode switching instruction unit 312 transmits the test mode switching instruction to the paired speaker 2 through the wireless interface unit 300 (Step S323). Then, the operation reception unit 302 switches the own wireless terminal 3 to the test mode (Step S324).

When the own wireless terminal 3 is switched to the test mode, the delay time measurement unit 315 turns on the microphone of the man-machine interface unit 301, and extracts each of the pieces of audio data for testing having different frequencies from the collected sound data (Step S325). Specifically, the delay time measurement unit 315 extracts the audio data for testing which has been reproduced by and output from the paired speaker 2 and the pieces of audio data for testing each of which has been output from the video conferencing terminal 5 belonging to the same network 9 as that of the own wireless terminal 3 (the pieces of audio data for testing each of which has been reproduced by and output from the wireless speaker 2 of another wireless speaker system 1 that forms a group together with the wireless speaker system 1 including the own wireless terminal 3) from the collected sound data of the microphone. Then, the delay time measurement unit 315 measures the reception timing of each of the extracted pieces of audio data for testing (Step S326).

Subsequently, the test frequency reception unit 314 receives, from the paired speaker 2 through the wireless interface unit 300, the frequency of the audio data for testing which is reproduced by and output from the paired speaker 2 (Step S327). Then, the test frequency reception unit 314 notifies the received frequency to the delay time measurement unit 315. In response thereto, the delay time measurement unit 315 sets, as the reference timing, the latest reception timing among the reception timings of the respective pieces of audio data for testing, and calculates, as the delay time, the difference between the reference timing and the reception timing of the audio data for testing reproduced by and output from the paired speaker 2, which is identified by the frequency notified by the test frequency reception unit 314 (Step S328).

Then, the delay time measurement unit 315 passes the calculated delay time to the delay time transmission unit 316. In response thereto, the delay time transmission unit 316 transmits the delay time received from the delay time measurement unit 315 to the paired speaker 2 through the wireless interface unit 300 (Step S329).

The wireless speaker system 1 has been described above.

Next, the media server 4 is described.

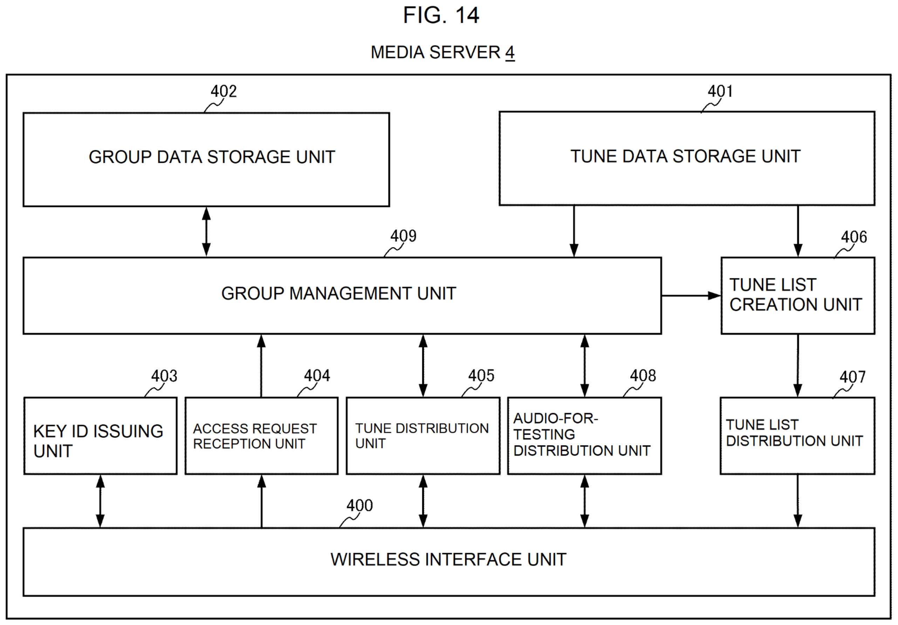

FIG. 14 is a schematic functional configuration diagram of the media server 4.

As illustrated in the figure, the media server 4 includes a wireless interface unit 400, a tune data storage unit 401, a group data storage unit 402, a key ID issuing unit 403, an access request reception unit 404, a tune distribution unit 405, a tune list creation unit 406, a tune list distribution unit 407, an audio-for-testing distribution unit 408, and a group management unit 409.

The wireless interface unit 400 is an interface for establishing connection to the access point 7.

The tune data storage unit 401 stores audio data on tunes.

The group data storage unit 402 stores, for each group for simultaneous distribution, information on the wireless speaker systems 1 that form the group.

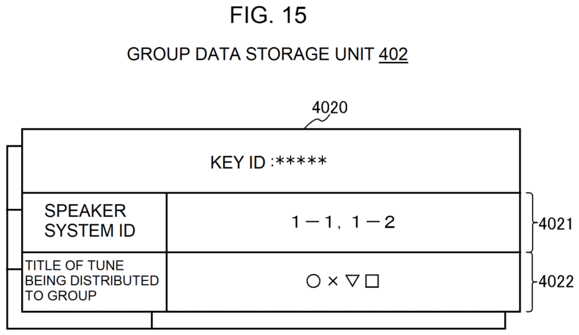

FIG. 15 is a diagram for schematically illustrating an example of registered information of the group data storage unit 402.

As illustrated in the figure, a table 4020 of group data is stored in the group data storage unit 402 for each group for simultaneous distribution in association with a key ID. The table 4020 of group data includes a record 4021, in which speaker IDs (for example, address information) that are pieces of identification information on the wireless speakers 2 belonging to the group are stored, and a record 4022, in which a title of a tune being simultaneously distributed is stored.

The key ID issuing unit 403 issues a key ID in accordance with a key ID issuing request received from the wireless speaker 2, and transmits the issued key ID to this wireless speaker 2.

The access request reception unit 404 receives an access request accompanied by the key ID from the wireless speaker 2.

The tune distribution unit 405 simultaneously distributes the audio data on the tune to the respective wireless speakers 2 that are stored in the group data storage unit 402 in association with the same key ID.

The tune list creation unit 406 creates a list of tunes that can be distributed to the wireless speaker 2 based on the audio data on the tunes stored in the tune data storage unit 401.

The tune list distribution unit 407 distributes the tune list created by the tune list creation unit 406 to the wireless speaker 2.

The audio-for-testing distribution unit 408 simultaneously distributes pieces of audio data for testing respectively having different frequencies to the respective wireless speakers 2 stored in the group data storage unit 402 in association with the same key ID. To each piece of audio data for testing, the frequency of the piece of audio data is assumed to be added as attribute information.

The group management unit 409 manages a group of the wireless speaker systems 1 associated with the same key ID based on the group data storage unit 402. The group management unit 409 also updates the group data storage unit 402 in accordance with the access request received by the access request reception unit 404. Further, the group management unit 409 assists the tune distribution unit 405 in simultaneously distributing data and the audio-for-testing distribution unit 408 in simultaneously distributing data for testing having different frequencies.

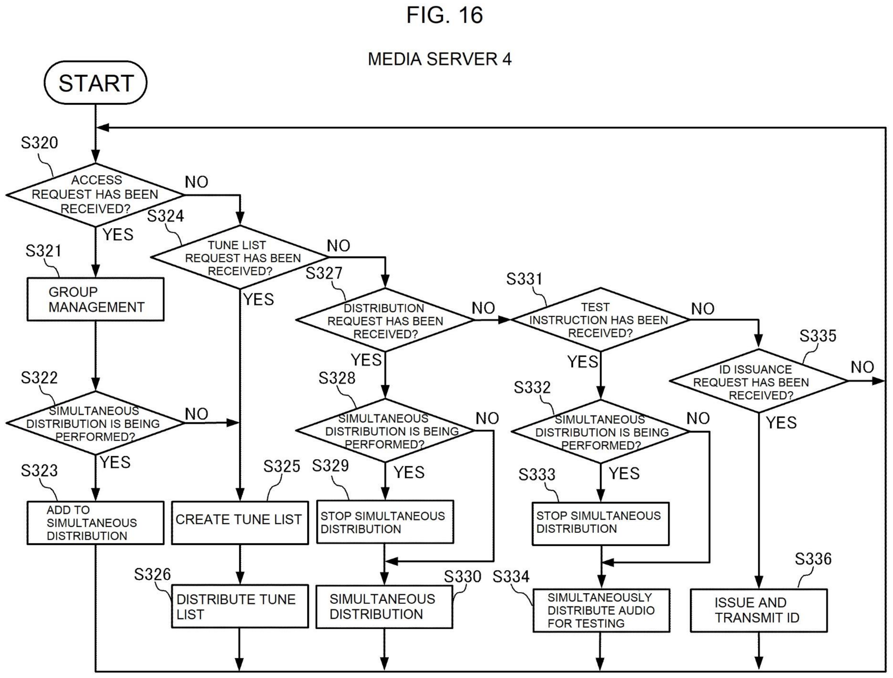

FIG. 16 is a flow chart for illustrating an operation of the media server 4.

When the access request reception unit 404 receives an access request from the wireless speaker 2 through the wireless interface unit 400 ("YES" in Step S320), the access request reception unit 404 notifies the key ID specified in this access request to the group management unit 409 together with the wireless speaker 2 of an access request source. In response thereto, the group management unit 409 uses the group data storage unit 402 to perform the group management on the wireless speaker 2 of the access request source in association with this key ID (Step S321). Specifically, when the table 4020 of group data associated with this key ID is registered in the group data storage unit 402, the speaker ID of this wireless speaker 2 is added to the record 4021 of this table 4020. Meanwhile, when the table 4020 of group data associated with this key ID is not registered in the group data storage unit 402, this table 4020 is newly registered in the group data storage unit 402 (in this case, the record 4022 for registering the title of the tune being simultaneously distributed is left blank), and the speaker ID of this wireless speaker 2 is added to the record 4021 of this table 4020.

Subsequently, the group management unit 409 refers to the group data storage unit 402 to determine whether or not the title of the tune being simultaneously distributed is registered in the record 4022 of the table 4020 in which the speaker ID of the wireless speaker 2 of the access request source is registered (Step S322). When the title is registered ("YES" in Step S322), the group management unit 409 notifies the speaker ID of the wireless speaker 2 of this access request source to the tune distribution unit 405 together with the key ID associated with this table 4020. In response thereto, the tune distribution unit 405 associates the key ID and the speaker ID that have been notified with each other, to thereby simultaneously distribute the tune being simultaneously distributed to the respective wireless speakers 2 belonging to the group identified by this key ID, to the wireless speaker 2 of the access request source as well through the wireless interface unit 400 (Step S323).

Meanwhile, when the title of the tune being simultaneously distributed is not registered in the record 4022 of the table 4020 in which the speaker ID of the wireless speaker 2 of the access request source is registered ("NO" in Step S322), the group management unit 409 notifies the speaker ID of the wireless speaker 2 of the access request source to the tune list creation unit 406. In response thereto, the tune list creation unit 406 creates a tune list of the audio data on the tunes stored in the tune data storage unit 401 (Step S325), and notifies the created tune list to the tune list distribution unit 407 together with the speaker ID of the wireless speaker 2 of the access request source. Then, the tune list distribution unit 407 distributes the notified tune list to the wireless speaker 2 of the access request source which is identified by the notified speaker ID, through the wireless interface unit 400 (Step S326).

Further, when the tune list distribution unit 407 receives a tune list request from the wireless speaker 2 through the wireless interface unit 400 ("YES" in Step S324), the tune list distribution unit 407 instructs the tune list creation unit 406 to create a tune list. In response thereto, the tune list creation unit 406 creates a tune list of the audio data on the tunes stored in the tune data storage unit 401 (Step S325), and notifies the created tune list to the tune list distribution unit 407. Then, the tune list distribution unit 407 distributes the notified tune list to the wireless speaker 2 of a tune list request source through the wireless interface unit 400 (Step S326).

Further, when the tune distribution unit 405 receives a distribution request from the wireless speaker 2 through the wireless interface unit 400 ("YES" in Step S327), the tune distribution unit 405 notifies the title of the tune specified in this distribution request to the group management unit 409 together with the speaker ID of the wireless speaker 2 of a distribution request source. In response thereto, the group management unit 409 determines whether or not a tune is being simultaneously distributed to the group to which the wireless speaker 2 identified by the notified speaker ID belongs (Step S328). Specifically, the group management unit 409 retrieves the table 4020 of group data in which the notified speaker ID is registered in the record 4021 to determine that the simultaneous distribution is being performed when the title of the tune is registered in the record 4022 of this table 4020 and determine that the simultaneous distribution is not being performed when the title of the tune is not registered.

When the simultaneous distribution is not being performed ("NO" in Step S328), the group management unit 409 registers the notified title of the tune in the record 4022 of the retrieved table 4020, and also reads out the audio data having this title of the tune from the tune data storage unit 401. Then, the group management unit 409 passes the read-out audio data to the tune distribution unit 405 together with the key ID associated with this table 4020 and all the speaker IDs registered in the record 4021 of this table 4020. In response thereto, the tune distribution unit 405 associates the respective speaker IDs with the key ID, and also simultaneously distributes the audio data on the tune received from the group management unit 409 to the respective wireless speakers 2 belonging to the same group, which are identified by those speaker IDs, through the wireless network interface unit 400 (Step S330).

Meanwhile, when the simultaneous distribution is being performed ("YES" in Step S328), the group management unit 409 registers the notified title of the tune in the record 4022 of the retrieved table 4020, and also reads out the audio data on this tune from the tune data storage unit 401. Then, the group management unit 409 passes the read-out audio data to the tune distribution unit 405 together with the key ID associated with this table 4020. In response thereto, the tune distribution unit 405 stops the simultaneous distribution of the tune being simultaneously distributed to the respective wireless speakers 2 identified by the speaker IDs associated with the key ID (Step S329). Then, the tune distribution unit 405 simultaneously distributes the audio data on the tune received from the group management unit 409 to the respective wireless speakers 2 identified by the speaker IDs associated with the key ID, through the wireless network interface unit 400 (Step S330).

Further, when the audio-for-testing distribution unit 408 receives a test instruction from the wireless speaker 2 through the wireless network interface unit 400 ("YES" in Step S331), the audio-for-testing distribution unit 408 notifies the speaker ID of this wireless speaker 2 of a test instruction source to the group management unit 409. In response thereto, the group management unit 409 determines whether or not a tune is being simultaneously distributed to the group to which the wireless speaker 2 identified by the notified speaker ID belongs in the same manner as Step S328 (Step S332).

When the simultaneous distribution is not being performed ("NO" in Step S332), the group management unit 409 passes all the speaker IDs registered in the record 4021 of the retrieved table 4020 to the audio-for-testing distribution unit 408. In response thereto, the audio-for-testing distribution unit 408 simultaneously distributes the pieces of audio data for testing having different frequencies to the respective wireless speakers 2 belonging to the same group, which are identified by those speaker IDs, through the wireless network interface unit 400 (Step S334).

Meanwhile, when the simultaneous distribution is being performed ("YES" in Step S332), the group management unit 409 clears the title of the tune registered in the record 4022 of the retrieved table 4020, and also passes the key ID associated with this table 4020 to the tune distribution unit 405. In response thereto, the tune distribution unit 405 stops the simultaneous distribution of the tune being simultaneously distributed to the respective wireless speakers 2 identified by the speaker IDs associated with the key ID (Step S333). Subsequently, the audio-for-testing distribution unit 408 simultaneously distributes the pieces of audio data for testing having different frequencies to the respective wireless speakers 2 belonging to the same group, which are identified by those speaker IDs, through the wireless network interface unit 400 (Step S334).

Further, when the key ID issuing unit 403 receives a key ID issuance request from the wireless speaker 2 through the wireless network interface unit 400 ("YES" in Step S335), the key ID issuing unit 403 issues a key ID. Then, the key ID issuing unit 403 transmits the issued key ID to the wireless speaker 2 of a key ID issuance request source through the wireless network interface unit 400 (Step S336).

The first embodiment of the present invention has been described above.

In this embodiment, the media server 4 simultaneously distributes audio data on the same tune to a plurality of wireless speakers 2 that have accessed the media server 4 through use of the same key ID, and hence sharing the key ID among the plurality of wireless speaker systems 1 enables, even when the plurality of wireless speaker systems 1 belong to different networks 9 that are geographically separated, those wireless speaker systems 1 to perform group reproduction of the audio data on the same tune.

Further, the media server 4 transmits the tune list to the wireless speaker 2. Then, the wireless speaker 2 transmits the tune list to the paired terminal 3. The wireless terminal 3 displays the tune selection screen including the tune list received from the paired speaker 2, and when a tune selection operation is received from the user, transmits, to the paired speaker 2, the reproduction instruction accompanied by the specification of the tune specified in the tune selection operation. The wireless speaker 2 transmits, to the media server 4, the distribution request accompanied by the specification of the tune specified in the reproduction instruction received from the paired terminal 3. Then, the media server 4 ends the distribution of the audio data currently being simultaneously distributed, and simultaneously distributes the audio data on the tune specified in this distribution request to all the wireless speaker systems 1 belonging to the same group as that of the wireless speaker system 1 including the wireless speaker 2 of the distribution request source. This enables the user of the wireless speaker system 1 to easily change a tune to be subjected to the group reproduction through the tune selection screen. In this manner, according to this embodiment, the group reproduction of the audio data on the same tune can be performed by the plurality of wireless speaker systems 1 belonging to the different networks 9, and each of users of the plurality of wireless speaker systems 1 belonging to the same group can easily change the tune to be subjected to the group reproduction.

Further, in this embodiment, the wireless speaker 2 transmits an ID issuance request to the media server 4 in accordance with an instruction from the paired terminal 3, and when the wireless speaker 2 acquires a key ID from the media server 4, transmits this key ID to the paired terminal 3. When the wireless terminal 3 receives the key ID from the paired speaker 2, the wireless terminal 3 visualizes and displays the key ID. When the user of the wireless speaker system 1 causes the camera of the video conferencing terminal 5 to pick up an image of the screen of the wireless terminal 3 on which the visualized key ID is displayed and the user of another wireless speaker system 1 belonging to the same group as that of this wireless speaker system 1 causes the wireless terminal 3 to pick up an image of the visualized key ID displayed on the video conferencing terminal 5, the wireless terminal 3 reads the key ID from picked-up image data, and transmits the key ID to the paired speaker 2. In this manner, according to this embodiment, the key ID can be shared among the wireless speaker systems 1 belonging to the same group through use of the video conferencing, thereby improving convenience.

Further, in this embodiment, in accordance with the test instruction received from a wireless terminal 3 of any of the plurality of wireless speaker systems 1 that have accessed the media server 4 through use of the same key ID, the media server 4 simultaneously distributes the pieces of audio data for testing having different frequencies to those respective wireless speaker systems 1.

Further, the wireless terminal 3 transmits the test instruction to the media server 4 in accordance with the test operation received from the user, and causes the operation mode of the own wireless terminal 3 to transition to the test mode. Alternatively, the wireless terminal 3 switches the operation mode of the own wireless terminal 3 to the test mode in accordance with the test mode switching operation received from the user. Then, during the test mode, the wireless terminal 3 measures the reception timing of the audio data for testing output from the paired speaker 2, and also measures the reception timing of each piece of audio data for testing output from the wireless speaker 2 of each of the other wireless speaker systems 1 that form the same group as that of the wireless speaker system 1 including the own wireless terminal 3 through the video conferencing terminal 5. The wireless terminal 3 sets the latest reception timing among the measured reception timings as the reference timing, measures the difference between the reference timing and the reception timing of the audio data for testing output from the paired speaker 2, and notifies this difference to the paired speaker 2 as the delay time.

Then, the wireless speaker 2 reproduces and outputs the audio data on the tune received from the media server 4 after a delay of the delay time notified by the paired terminal 3.

Therefore, according to this embodiment, when the group reproduction of the audio data on the same tune is performed by the plurality of wireless speaker systems 1 that form the same group, it is possible to reduce audio misalignment between a sound reproduced from the wireless speaker 2 of the own wireless speaker system 1 and a sound reproduced from the wireless speaker 2 of another wireless speaker system 1 output from the video conferencing terminal 5.

### [Second Embodiment]

Next, a second embodiment of the present invention is described.

An audio system according to this embodiment differs from the audio system according to the first embodiment, which is illustrated in FIG. 1, in that a plurality of wireless speaker systems 1'-1 to 1'-n (in the following, may simply be referred to as "wireless speaker systems 1‴) are used instead of the plurality of wireless speaker systems 1-1 to 1-n, and that a media server 4' is used instead of the media server 4. Further, the wireless speaker systems 1'-1 to 1'-n differ from the wireless speaker systems 1-1 to 1-n according to the first embodiment in that wireless speakers 2'-1 to 2'-n (in the following, may simply be referred to as "wireless speakers 2‴) are used instead of the wireless speakers 2-1 to 2-n, and that wireless terminals 3'-1 to 3'-n (in the following, may simply be referred to as "wireless terminals 3‴) are used instead of the wireless terminals 3-1 to 3-n.

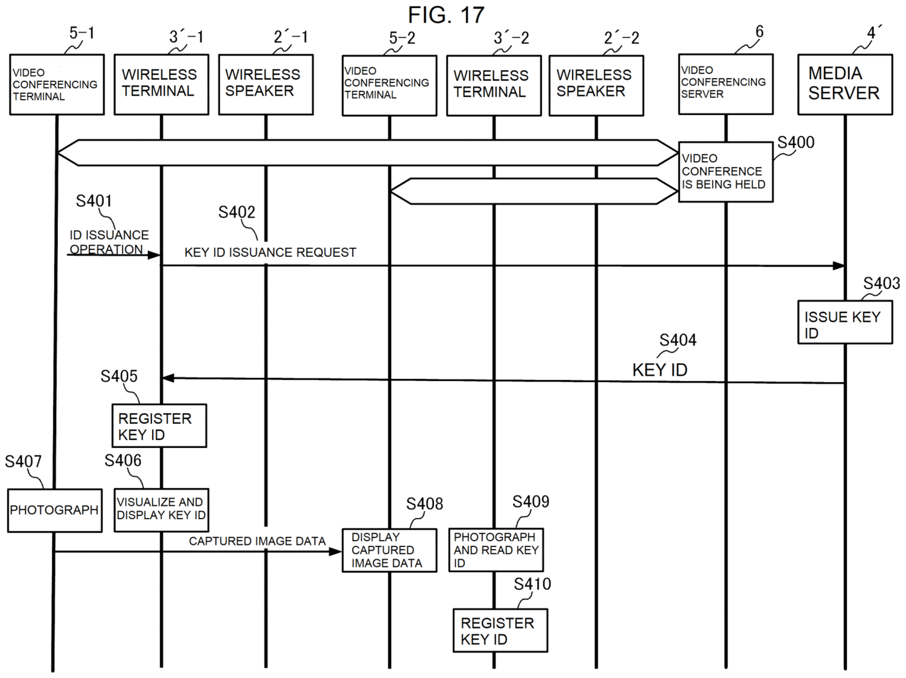

FIG. 17 is a sequence diagram for illustrating a key ID sharing operation between the plurality of wireless speaker systems 1'.

Here, a case in which the key ID is shared between the wireless speaker system 1'-1 and the wireless speaker system 1'-2 is described as an example.

As a premise, it is assumed that the video conferencing terminal 5-1 and the video conferencing terminal 5-2 are engaged in a video conference with each other through use of the video conferencing service provided by the video conferencing server 6 (Step S400), and that it has been determined through this video conference that the user of the video conferencing terminal 5-1 is to request the media server 4' to issue a key ID for forming a group.

First, when the wireless terminal 3'-1 receives a key ID issuance operation from the user (Step S401), the wireless terminal 3'-1 transmits a key ID issuance request to the media server 4' (Step S402).

Subsequently, when the media server 4' receives the key ID issuance request from the wireless terminal 3'-1, the media server 4' issues a key ID for forming a group with the plurality of wireless speaker systems 1' (Step S403), and transmits the issued key ID to the wireless terminal 3'-1 (Step S404).

Subsequently, when the wireless terminal 3'-1 receives the key ID from the media server 4', the wireless terminal 3'-1 registers this key ID therein (Step S405), visualizes this key ID as a character string, a two-dimensional code, or the like, and displays the key ID on the screen (Step S406). When the user of the wireless terminal 3'-1 points the screen of the wireless terminal 3'-1 toward the camera of the video conferencing terminal 5-1, the video conferencing terminal 5-1 photographs the visualized key ID displayed on the screen of the wireless terminal 3'-1, and transmits the captured image data to the video conferencing terminal 5-2 that is engaged in the video conference with the video conferencing terminal 5-1 (Step S407). In this manner, the visualized key ID is displayed on the screen of the video conferencing terminal 5-2 (Step S408).

Subsequently, when a user of the wireless terminal 3'-2 uses a camera of the wireless terminal 3'-2 to photograph the visualized key ID displayed on the screen of the video conferencing terminal 5-2, the wireless terminal 3'-2 reads the key ID from a captured image (Step S409), and registers the key ID therein (Step S410).

In the above-mentioned manner, the key ID is shared between the wireless speaker system 1'-1 and the wireless speaker system 1'-2.

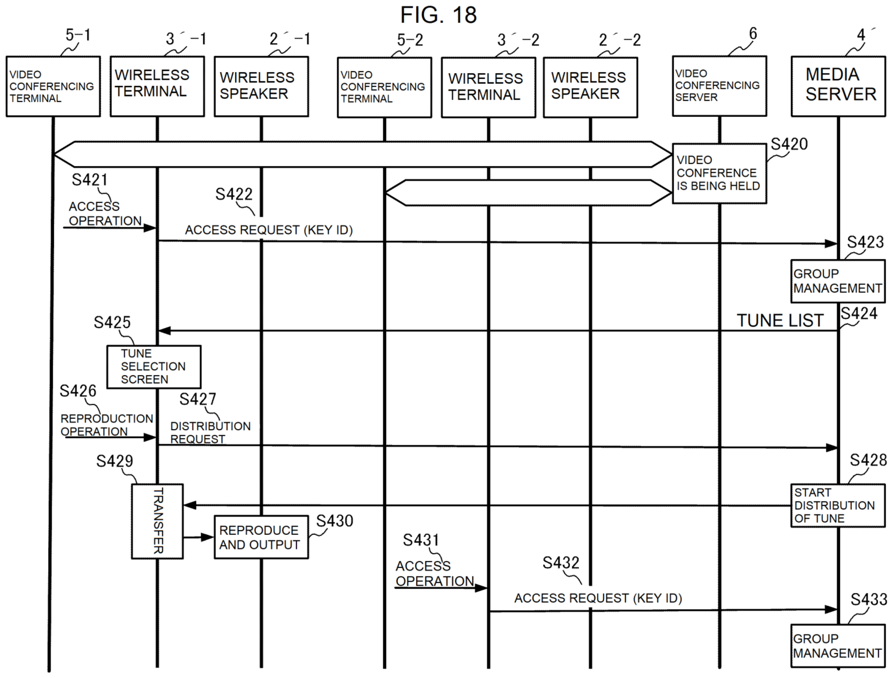

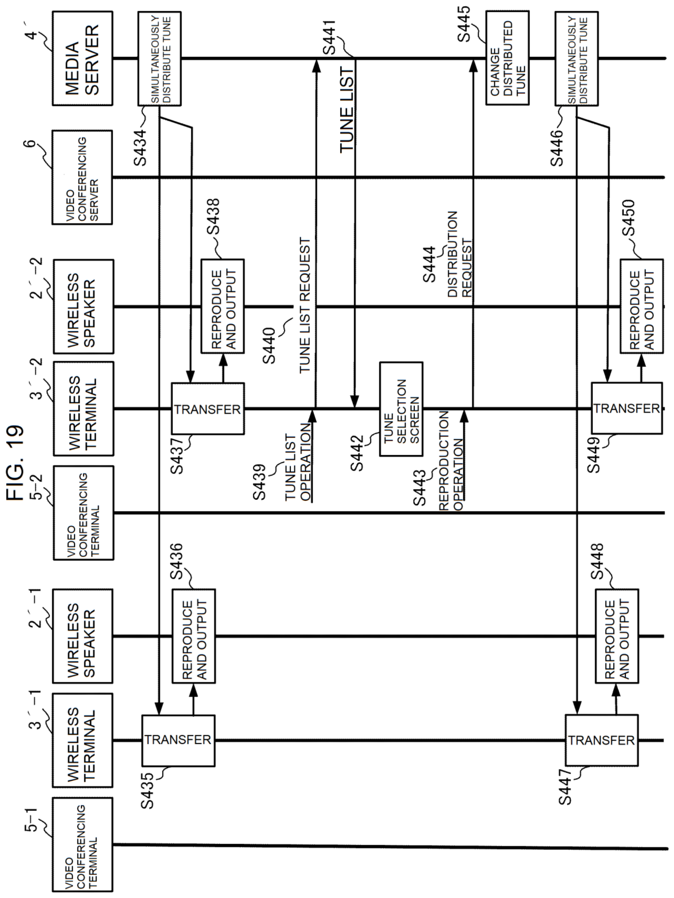

FIG. 18 and FIG. 19 are sequence diagrams for illustrating a group reproduction operation performed by the plurality of wireless speaker systems 1'.

Here, a case in which the group reproduction is performed by the wireless speaker system 1'-1 and the wireless speaker system 1'-2 is described as an example.

As a premise, it is assumed that the video conferencing terminal 5-1 and the video conferencing terminal 5-2 are engaged in a video conference with each other through use of the video conferencing service provided by the video conferencing server 6 (Step S420).

First, when the wireless terminal 3'-1 receives an operation for accessing the media server 4' from the user (Step S421), the wireless terminal 3'-1 transmits an access request accompanied by the key ID shared with the wireless terminal 3'-2 to the media server 4' (Step S422).

Subsequently, when the media server 4' receives the access request from the wireless terminal 3'-1, the media server 4' performs group management on the wireless terminal 3'-1 in association with the key ID specified in the access request (Step S423). The media server 4' also confirms that distribution of a tune to the wireless terminal 3' associated with this key ID has not yet been carried out, and transmits a tune list to the wireless terminal 3'-1 (Step S424).

Subsequently, the wireless terminal 3'-1 displays a tune selection screen including the tune list received from the media server 4' (Step S425) and receives a reproduction operation accompanied by tune selection from the user (Step S426). Then, the wireless terminal 3'-1 transmits, to the media server 4', a distribution request accompanied by the specification of the tune selected by the reproduction operation (Step S427).

When the media server 4' receives the distribution request from the wireless terminal 3'-1, the media server 4' associates the tune specified in the distribution request with the key ID with which the wireless terminal 3'-1 is associated, and also starts distribution of this tune (Step S428). In response thereto, the wireless terminal 3'-1 transfers the audio data on the tune distributed by the media server 4' to the wireless speaker 2'-1 (Step S429), and the wireless speaker 2'-1 reproduces and outputs this audio data (Step S430).

After that, when the wireless terminal 3'-2 receives an operation for accessing the media server 4' from the user (Step S431), the wireless terminal 3'-2 transmits an access request accompanied by the key ID shared with the wireless terminal 3'-1 (Step S432).

Subsequently, when the media server 4' receives the access request from the wireless terminal 3'-2, the media server 4' performs the group management on the wireless terminal 3'-2 in association with the key ID specified in this access request together with the wireless terminal 3'-1 (Step S433).

The media server 4' also confirms that distribution to the wireless terminal 3'-1 associated with this key ID is being carried out, and simultaneously distributes the tune, which is being distributed, to the wireless terminal 3'-2 in addition to the wireless terminal 3'-1 (Step S434). In response thereto, the wireless terminal 3'-1 and the wireless terminal 3'-2 transfer the audio data on the tune simultaneously distributed by the media server 4' to the wireless speaker 2'-1 and the wireless speaker 2'-2 (Step S435 and Step S437), and the wireless speaker 2'-1 and the wireless speaker 2'-2 perform group reproduction and output of this audio data on the tune (Step S436 and Step S438).

In this manner, users of the wireless speaker systems 1'-1 and 1'-2 can simultaneously listen to the same tune while holding the video conference through use of the video conferencing terminals 5-1 and 5-2, respectively.

Subsequently, when the wireless terminal 3'-2 receives a tune list operation from the user (Step S439), the wireless terminal 3'-2 transmits a tune list request to the media server 4' (Step S440). In response thereto, the media server 4' transmits the tune list to the wireless terminal 3'-2 (Step S441).

In response thereto, the wireless terminal 3'-2 displays a tune selection screen including the tune list (Step S442), and receives a reproduction operation accompanied by tune selection from the user (Step S443). Then, the wireless terminal 3'-2 transmits, to the media server 4', a distribution request accompanied by specification of the tune selected by the reproduction operation (Step S444).

When the media server 4' receives the distribution request from the wireless terminal 3'-2, the media server 4' changes the tune associated with the key ID with which the wireless terminal 3'-2 is associated to a tune specified in the distribution request (Step S445), and simultaneously distributes the tune specified in the distribution request to the wireless terminal 3'-1 and the wireless terminal 3'-2 associated with this key ID (Step S446). In response thereto, the wireless terminal 3'-1 and the wireless terminal 3'-2 transfer the audio data on the tune simultaneously distributed by the media server 4' to the wireless speaker 2'-1 and the wireless speaker 2'-2 (Step S447 and Step S449), and the wireless speaker 2'-1 and the wireless speaker 2'-2 perform group reproduction and output of this audio data on the tune (Step S448 and Step S450).

In this manner, the users of the wireless speaker systems 1'-1 and 1'-2 can freely change the tune to be simultaneously distributed to those wireless speaker systems 1'-1 and 1'-2, respectively.

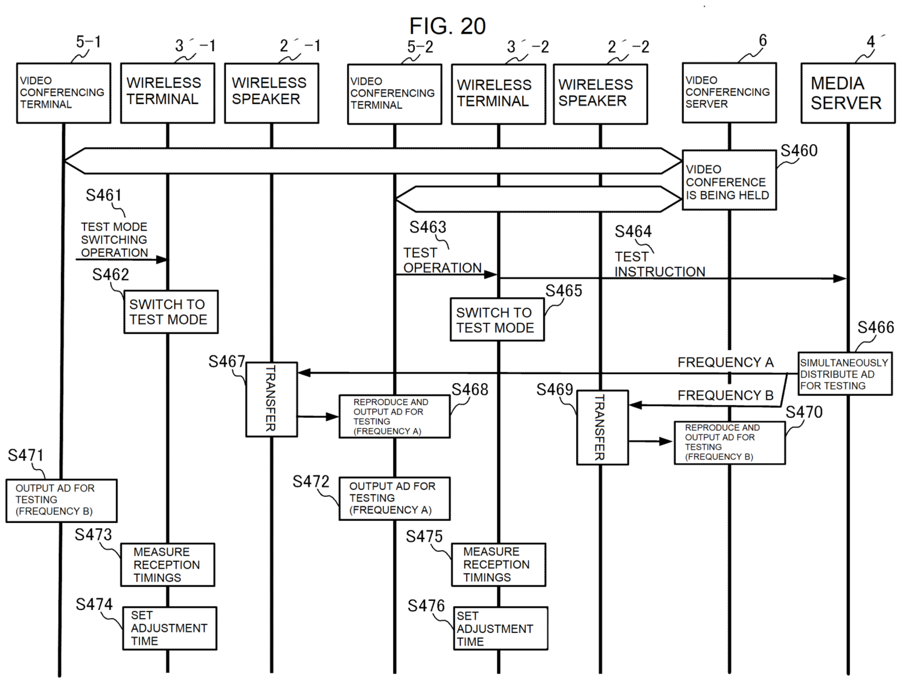

FIG. 20 is a sequence diagram for illustrating a test operation for eliminating audio misalignment at a time of group reproduction performed by the plurality of wireless speaker systems 1'.

Here, a test operation for eliminating audio misalignment when the group reproduction is performed by the wireless speaker system 1'-1 and the wireless speaker system 1'-2 is described as an example.

It is assumed that the wireless speaker system 1'-1 and the wireless speaker system 1'-2 have already been associated with the same key ID and subjected to the group management in the media server 4'.

As a premise, it is assumed that the video conferencing terminal 5-1 and the video conferencing terminal 5-2 are engaged in a video conference through use of the video conferencing service provided by the video conferencing server 6 (Step S460), and that it has been determined through this conference that the user of the video conferencing terminal 5-2 is to instruct the media server 4' to perform a test.

First, when the wireless terminal 3'-1 receives a switching operation for switching to a test mode from the user (Step S461), the wireless terminal 3'-1 switches its own operation mode from a normal mode to the test mode (Step S462).

Subsequently, when the wireless terminal 3'-2 receives a test operation from the user (Step S463), the wireless terminal 3'-2 transmits a test instruction to the media server 4' (Step S464). Further, the wireless terminal 3'-2 switches its own operation mode from the normal mode to the test mode (Step S465).

When the media server 4' receives the test instruction from the wireless terminal 3'-2, the media server 4' simultaneously distributes the same audio data for testing which differ in frequency (frequency range) to the wireless terminal 3'-2 and the wireless terminal 3'-1 that is subjected to the group management with the wireless terminal 3'-2 (the wireless terminal 3'-1 that is associated with the same key ID as that of the wireless terminal 3'-2) (Step S466). Here, audio data for testing having a frequency A and audio data for testing having a frequency B are simultaneously distributed to the wireless terminal 3'-1 and the wireless terminal 3'-2, respectively.

In response thereto, the wireless terminal 3'-1 and the wireless terminal 3'-2 transfer the audio data for testing having the frequency A and the audio data for testing having the frequency B, which have been simultaneously distributed by the media server 4', to the wireless speaker 2'-1 and the wireless speaker 2'-2, respectively (Step S467 and Step S469). Then, the wireless speaker 2'-1 and the wireless speaker 2'-2 reproduce and output the audio data for testing having the frequency A and the audio data for testing having the frequency B, respectively (Step S468 and Step S470).

The audio data for testing having the frequency B which has been reproduced by and output from the wireless speaker 2'-2 is collected by the microphone of the video conferencing terminal 5-2 and output from the video conferencing terminal 5-1 through the video conferencing (Step S471), and the audio data for testing having the frequency A which has been reproduced by and output from the wireless speaker 2'-1 is collected by the microphone of the video conferencing terminal 5-1 and output from the video conferencing terminal 5-2 through the video conferencing (Step S472).

The wireless terminal 3'-1 collects the audio data for testing having the frequency A which has been output from the wireless speaker 2'-1 by a microphone to measure a reception timing thereof, and also collects the audio data for testing having the frequency B which has been output from the wireless speaker 2'-2 through the video conferencing terminal 5-1 by the microphone to measure a reception timing thereof (Step S473). Then, the wireless terminal 3'-1 sets, as a reference timing, the latest reception timing among the reception timing of the audio data for testing having the frequency A which has been output from the wireless speaker 2'-1 and the reception timing of the audio data for testing having the frequency B which has been output from the wireless speaker 2'-2 through the video conferencing terminal 5-1, and calculates a difference between the reference timing and the audio data for testing having the frequency A which has been output from the wireless speaker 2'-1. Then, the wireless terminal 3'-1 sets the calculated difference as a delay time (Step S474). In this manner, the wireless terminal 3'-1 transfers, to the wireless speaker 2'-1, the audio data on the tune received from the media server 4' after a delay of the set delay time.

Similarly, the wireless terminal 3'-2 collects the audio data for testing having the frequency B which has been output from the wireless speaker 2'-2 by a microphone to measure a reception timing thereof, and also collects the audio data for testing having the frequency A which has been output from the wireless speaker 2'-1 through the video conferencing terminal 5-2 by the microphone to measure a reception timing thereof (Step S475). Then, the wireless terminal 3'-2 sets, as a reference timing, the latest reception timing among the reception timing of the audio data for testing having the frequency B which has been output from the wireless speaker 2'-2 and the reception timing of the audio data for testing having the frequency A which has been output from the wireless speaker 2'-1 through the video conferencing terminal 5-2, and calculates a difference between the reference timing and the audio data for testing having the frequency B which has been output from the wireless speaker 2'-2. Then, the wireless terminal 3'-2 sets the calculated difference as a delay time (Step S476). In this manner, the wireless terminal 3'-2 transfers, to the wireless speaker 2'-2, the audio data on the tune received from the media server 4' after a delay of the set delay time.

Next, the wireless terminal 3' of the wireless speaker system 1' that forms the audio system according to this embodiment is described in detail.

The media server 4' is the same as the media server 4 in the first embodiment except that a communication counterpart in receiving various requests and transmitting responses thereto and in distributing audio data is changed from the wireless speaker 2 to the wireless terminal 3', and hence detailed description thereof is omitted. Further, it is possible to use, as the wireless speaker 2', an existing wireless speaker that receives audio data from the media server 4' through the wireless terminal 3' and reproduces and outputs the audio data, and hence detailed description thereof is omitted.

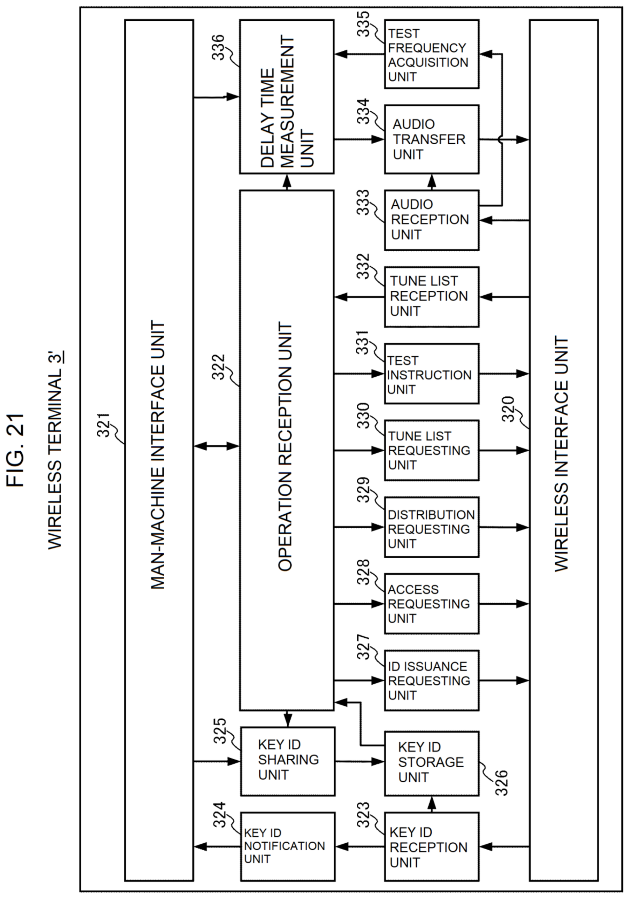

FIG. 21 is a schematic functional configuration diagram of the wireless terminal 3'.

As illustrated in the figure, the wireless terminal 3' includes a wireless interface unit 320, a man-machine interface unit 321, an operation reception unit 322, a key ID reception unit 323, a key ID notification unit 324, a key ID sharing unit 325, a key ID storage unit 326, an ID issuance requesting unit 327, an access requesting unit 328, a distribution requesting unit 329, a tune list requesting unit 330, a test instruction unit 331, a tune list reception unit 332, an audio reception unit 333, an audio transfer unit 334, a test frequency acquisition unit 335, and a delay time measurement unit 336.

The wireless interface unit 320 is an interface for establishing connection to the access point 7.

The man-machine interface unit 321 is an interface for displaying information to the user and for receiving various operations from the user, and includes an input/output device, such as a display with a touch sensor, as well as a microphone and a camera.

The operation reception unit 322 receives various operations from the user through the man-machine interface unit 321. Further, the operation reception unit 322 displays a tune selection screen for receiving a reproduction operation for a desired tune on the man-machine interface unit 321 in accordance with a tune list received from the tune list reception unit 332.

The key ID reception unit 323 receives a key ID from the media server 4' through the wireless interface unit 320 in response to a key ID issuance request performed by the ID issuance requesting unit 327.

The key ID notification unit 324 visualizes the key ID received by the key ID reception unit 323 as a character string, a two-dimensional code, or the like, and displays the key ID on the man-machine interface unit 321.

The key ID sharing unit 325 reads the visualized key ID from screen data of another wireless terminal 3' displayed on the video conferencing terminal 5 belonging to the same network 9 as that of the own wireless terminal 3', an image of which has been picked up by the camera of the man-machine interface unit 321. In this manner, the key ID is shared with the other wireless terminal 3'.

The key ID storage unit 326 stores the key ID received by the key ID reception unit 323 or the key ID shared with the other wireless terminal 3' by the key ID sharing unit 325.

The ID issuance requesting unit 327 transmits a key ID issuance request to the media server 4' through the wireless interface unit 320 in accordance with an instruction from the operation reception unit 322.

The access requesting unit 328 transmits, in accordance with an instruction from the operation reception unit 322, an access request accompanied by the specification of the key ID stored in the key ID storage unit 326 to the media server 4' through the wireless interface unit 320.

The distribution requesting unit 329 transmits a distribution request accompanied by the specification of a tune to the media server 4' through the wireless interface unit 320 in accordance with an instruction from the operation reception unit 322.

The tune list requesting unit 330 transmits a tune list request to the media server 4' through the wireless interface unit 320 in accordance with an instruction from the operation reception unit 322.

The test instruction unit 331 transmits a test instruction to the media server 4' through the wireless interface unit 320 in accordance with an instruction from the operation reception unit 322.

The tune list reception unit 332 receives a tune list from the media server 4' through the wireless interface unit 320 in response to the tune list request transmitted to the media server 4' by the tune list requesting unit 330.

The audio reception unit 333 receives the audio data on the tune or the audio data for testing from the media server 4' through the wireless interface unit 320.

When the audio data received from the media server 4' by the audio reception unit 333 is the audio data on the tune (normal mode), the audio transfer unit 334 transfers this audio data to the paired speaker 2' through the wireless interface unit 320 after a delay of the delay time measured by the delay time measurement unit 336. Meanwhile, when the audio data received from the media server 4' by the audio reception unit 333 is the audio data for testing (test mode), the audio transfer unit 334 immediately transfers this audio data to the paired speaker 2' through the wireless interface unit 320.

When the audio data received from the media server 4' by the audio reception unit 333 is the audio data for testing, the test frequency acquisition unit 335 acquires frequency information of the audio data for testing from the attribute information of this audio data.

The delay time measurement unit 336 extracts, from collected sound data of the microphone of the man-machine interface unit 321, the audio data for testing which has been reproduced by and output from the paired speaker 2' (the audio data for testing having the frequency acquired by the test frequency acquisition unit 335) and pieces of audio data for testing having different frequencies each of which has been output from the video conferencing terminal 5 belonging to the same network 9 as that of the own wireless terminal 3', and measures the reception timing of each thereof. Then, the delay time measurement unit 336 sets, as the reference timing, the latest reception timing among the reception timing of the audio data for testing which has been reproduced by and output from the paired speaker 2' and the reception timings of the pieces of audio data for testing each of which has been output from the video conferencing terminal 5 belonging to the same network 9 as that of the own wireless terminal 3', and measures the difference between the reference timing and the reception timing of the audio data for testing output from the paired speaker 2' as the delay time.

In the same manner as the functional configuration of the wireless terminal 3 illustrated in FIG. 10, the functional configuration of the wireless terminal 3' illustrated in FIG. 21 may be implemented by hardware through use of an integrated logic IC such as an ASIC or an FPGA, or may be implemented by software through use of a computer such as a DSP. As another example, the functional configuration may be implemented as a process on a portable computer, such as a smartphone or a tablet PC, including a CPU, a memory, an auxiliary storage device such as a flash memory, and a wireless communication device such as a wireless LAN adapter, by the CPU loading a predetermined program into the memory from the auxiliary storage device and executing the program.

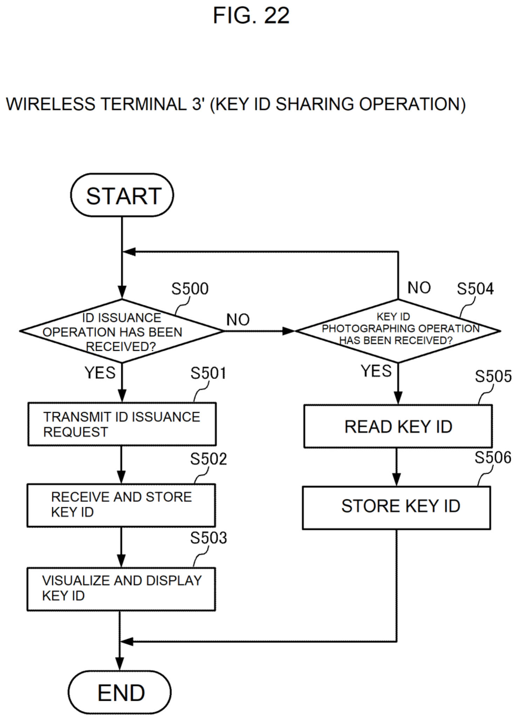

FIG. 22 is a flow chart for illustrating a key ID sharing operation of the wireless terminal 3'.

When the operation reception unit 322 receives an ID issuance operation from the user through the man-machine interface unit 321 ("YES" in Step S500), the operation reception unit 322 instructs the ID issuance requesting unit 327 to issue an ID. In response thereto, the ID issuance requesting unit 327 transmits a key ID issuance request to the media server 4' through the wireless interface unit 320 (Step S501).

Subsequently, the key ID reception unit 323 receives a key ID from the media server 4' through the wireless interface unit 320, and stores the key ID in the key ID storage unit 326 (Step S502). Further, the key ID reception unit 323 passes the received key ID to the key ID notification unit 324. In response thereto, the key ID notification unit 324 visualizes the key ID as a character string, a two-dimensional code, or the like, and displays the key ID on the man-machine interface unit 321 (Step S503).

Further, when the operation reception unit 322 receives an operation for photographing the key ID from the user through the man-machine interface unit 321 ("YES" in Step S504), the operation reception unit 322 instructs the key ID sharing unit 325 to read the key ID. In response thereto, the key ID sharing unit 325 uses the camera of the man-machine interface unit 321 to photograph the visualized key ID displayed on the screen of the other wireless terminal 3', which has been displayed on the video conferencing terminal 5 belonging to the same network 9 as that of the own wireless terminal 3', reads the key ID from this captured image (Step S505), and stores the key ID in the key ID storage unit 326 (Step S506).

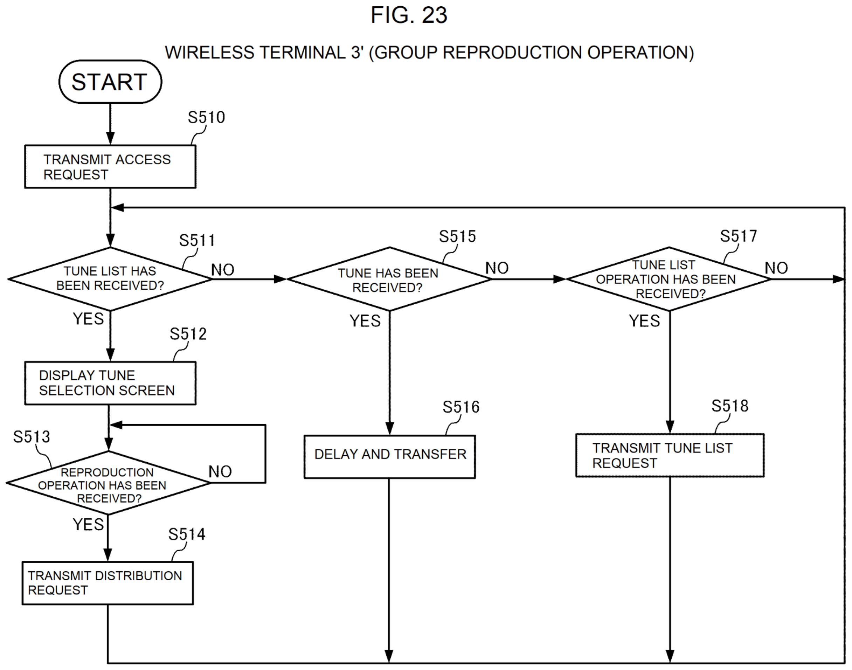

FIG. 23 is a flow chart for illustrating a group reproduction operation of the wireless terminal 3'.

This flow is started when the operation reception unit 322 receives an access operation from the user through the man-machine interface unit 321.

First, the operation reception unit 322 notifies an access request to the access requesting unit 328. In response thereto, the access requesting unit 328 transmits the access request to the media server 4' through the wireless interface unit 320 (Step S510).

Subsequently, when the tune list reception unit 332 receives a tune list from the media server 4' through the wireless interface unit 320 ("YES" in Step S511), the tune list reception unit 332 passes the received tune list to the operation reception unit 322. In response thereto, the operation reception unit 322 displays, on the man-machine interface unit 321, a tune selection screen for selecting a desired tune from the tune list and instructing reproduction thereof (Step S512), and waits for the user to perform a reproduction operation (Step S513).

After that, when the operation reception unit 322 receives a reproduction operation from the user through the tune selection screen displayed on the man-machine interface unit 321 ("YES" in Step S513), the operation reception unit 322 notifies a tune specified in this reproduction operation to the distribution requesting unit 329. In response thereto, the distribution requesting unit 329 transmits a distribution request accompanied by the specification of the tune notified by the operation reception unit 322 to the media server 4' through the wireless interface unit 320 (Step S514).

Further, when the audio reception unit 333 receives audio data on a tune from the media server 4' through the wireless interface unit 320 ("YES" in Step S515), the audio reception unit 333 passes this received audio data on the tune to the audio transfer unit 334. In response thereto, when a delay time has been set by the delay time measurement unit 336, the audio transfer unit 334 delays the audio data on the tune by the set delay time, and then transfers the audio data on the tune to the paired speaker 2' through the wireless interface unit 320 (Step S516).

Further, when the operation reception unit 322 receives a tune list operation from the user through the man-machine interface unit 321 ("YES" in Step S517), the operation reception unit 322 instructs the tune list requesting unit 330 for a tune list request. In response thereto, the tune list requesting unit 330 transmits the tune list request to the media server 4' through the wireless interface unit 320 (Step S518).

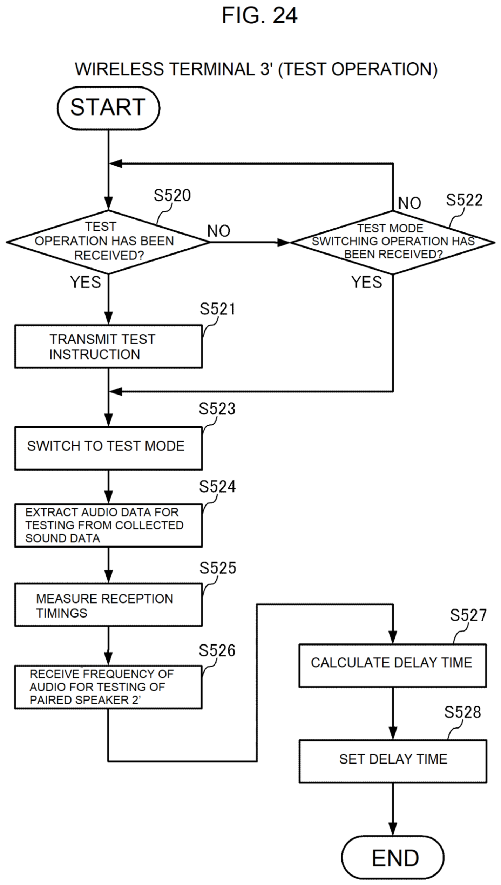

FIG. 24 is a flow chart for illustrating a test operation for eliminating audio misalignment at a time of group reproduction of the wireless terminal 3'.

When the operation reception unit 322 receives a test operation from the user through the man-machine interface unit 321 ("YES" in Step S520), the operation reception unit 322 notifies a test instruction to the test instruction unit 331. In response thereto, the test instruction unit 331 transmits the test instruction to the media server 4' through the wireless interface unit 320 (Step S521). Then, the operation reception unit 322 switches the own wireless terminal 3' to the test mode (Step S523).

Further, when the operation reception unit 322 receives a test mode switching operation from the user through the man-machine interface unit 321 ("YES" in Step S522), the operation reception unit 322 switches the own wireless terminal 3' to the test mode (Step S523).

When the own wireless terminal 3' is switched to the test mode, the delay time measurement unit 336 clears the delay time set in the audio transfer unit 334, turns on the microphone of the man-machine interface unit 321, and extracts each of the pieces of audio data for testing having different frequencies from the collected sound data (Step S524). Specifically, the delay time measurement unit 336 extracts the audio data for testing which has been reproduced by and output from the paired speaker 2' and the pieces of audio data for testing each of which has been output from the video conferencing terminal 5 belonging to the same network 9 as that of the own wireless terminal 3' (the pieces of audio data for testing each of which has been reproduced by and output from the wireless speaker 2' of another wireless speaker system 1' that forms a group together with the wireless speaker system 1' including the own wireless terminal 3') from the collected sound data of the microphone. Then, the delay time measurement unit 336 measures the reception timing of each of the extracted pieces of audio data for testing (Step S525).

Subsequently, the test frequency acquisition unit 335 acquires frequency information of the audio data for testing from the attribute information of the audio data for testing received from the media server 4' by the audio reception unit 333 (Step S526). Then, the test frequency acquisition unit 335 notifies the acquired frequency to the delay time measurement unit 336. In response thereto, the delay time measurement unit 336 sets, as the reference timing, the latest reception timing among the reception timings of the respective pieces of audio data for testing, and calculates, as the delay time, the difference between the reference timing and the reception timing of the audio data for testing reproduced by and output from the paired speaker 2', which is identified by the frequency notified by the test frequency acquisition unit 335 (Step S527).

Then, the delay time measurement unit 336 sets the calculated delay time in the audio transfer unit 334 (Step S528).

The second embodiment of the present invention has been described above.

This embodiment has the same effects as those of the first embodiment. In addition, according to this embodiment, it is possible to use, as the wireless speaker 2', an existing wireless speaker that receives audio data from the media server 4' through the wireless terminal 3' and reproduces and outputs the audio data, and hence a cost of introducing the system can be suppressed.

The present invention is not limited to each of the above-mentioned embodiments, and various modifications can be made thereto within the scope of the gist of the invention.

For example, in each of the above-mentioned embodiments, the key ID is shared between the wireless speaker systems 1, 1' belonging to the same group through use of the video conferencing. However, the present invention is not limited thereto. The key ID may be shared through a social networking service (SNS), electronic mail, or the like.

Further, each of the above-mentioned embodiments has been described by taking an exemplary case in which the wireless speaker systems 1, 1' are wirelessly connected to the Internet 8 through the access point 7. However, the present invention is not limited thereto. The present invention may be achieved by wired connection to the Internet 8 through a router or the like by a local area network (LAN) cable.

### Reference Signs List

1-1 to 1-n: wireless speaker system
2, 2-1 to 2-n, 2', 2'-1, 2'-2: wireless speaker
3, 3-1 to 3-n, 3', 3'-1, 3'-2: wireless terminal
4, 4': media server 5-1 to 5-n: video conferencing terminal
6: video conferencing server 7-1 to 7-n: access point
8: Internet 9-1 to 9-n: network
200, 300, 320, 400: wireless interface unit
201, 326: key ID storage unit
202: key ID acquisition unit 203, 306: key ID transmission unit
204: access processing unit 205, 333: audio reception unit
206: reproduction-and-output unit 207: speaker unit
208: test mode processing unit 209: tune list acquisition unit
210: tune list transfer unit 211: distribution requesting unit
301, 321: man-machine interface unit
302, 322: operation reception unit
303, 323: key ID reception unit
304, 324; key ID notification unit
305, 325: key ID sharing unit
307: ID issuance instruction unit 308: access instruction unit
309: reproduction instruction unit 310: tune list instruction unit
311, 331: test instruction unit 312: test mode switching instruction unit
313, 332: tune list reception unit 314: test frequency reception unit
315, 336: delay time measurement unit 316: delay time transmission unit
327: ID issuance requesting unit 328: access requesting unit
329: distribution requesting unit 330: tune list requesting unit
334: audio transfer unit 335: test frequency acquisition unit
401: tune data storage unit 402: group data storage unit
403: key ID issuing unit 404: access request reception unit
405: tune distribution unit 406: tune list creation unit
407: tune list distribution unit 408: audio-for-testing distribution unit
409: group management unit

## Claims

1. An audio system, comprising:
a plurality of wireless speaker systems each including a wireless speaker and a wireless terminal that functions as a remote controller for the wireless speaker; and
a media server configured to distribute audio data to the plurality of wireless speaker systems,
wherein each of the plurality of wireless speaker systems includes:
key ID storage means for storing a key ID shared with another of the plurality of wireless speaker systems that forms a group together with the each of the plurality of wireless speaker systems;
access means for accessing the media server through use of the key ID to achieve connection to the media server;
tune reception means for receiving audio data on a tune from the media server to which the connection has been achieved by the access means;
tune list reception means for receiving a tune list from the media server to which the connection has been achieved by the access means;
reproduction-and-output means for reproducing and outputting the audio data on the tune received by the tune reception means;
reproduction operation reception means for displaying a tune selection screen including the tune list received by the tune list reception means and receiving a reproduction operation accompanied by tune selection from a user; and
distribution requesting means for transmitting, to the media server, a distribution request accompanied by specification of a tune selected by the reproduction operation received by the reproduction operation reception means,
wherein the media server includes:
group management means for performing group management on the plurality of wireless speaker systems that have accessed the media server through use of the same key ID;
tune distribution means for simultaneously distributing the audio data on the same tune to the plurality of wireless speaker systems subjected to the group management by the group management means; and
tune list distribution means for distributing the tune list to the plurality of wireless speaker systems subjected to the group management by the group management means, and
wherein the tune distribution means is configured to change, when the distribution request is received from any one of the plurality of wireless speaker systems subjected to the group management by the group management means, the audio data on the tune to be simultaneously distributed to the plurality of wireless speaker systems to the audio data on the tune specified by the distribution request.

2. The audio system according to claim 1,
wherein each of the wireless speakers includes:
the key ID storage means;
the access means;
the tune reception means;
the tune list reception means;
the reproduction-and-output means;
the distribution requesting means; and
tune list transfer means for transferring the tune list received by the tune list reception means to the wireless terminal that forms the wireless speaker system together with the each of the wireless speakers, and
wherein each of the wireless terminals includes:
the reproduction operation reception means; and
reproduction operation notification means for notifying operation content of the reproduction operation received by the reproduction operation reception means to the wireless speaker that forms the wireless speaker system together with the each of the wireless terminals.

3. The audio system according to claim 2,
wherein the media server further includes key ID issuing means for issuing a key ID in accordance with a key ID issuance request received from each of the wireless speakers, and transmitting the key ID to the each of the wireless speakers,
wherein each of the wireless speakers includes:
key ID acquisition means for transmitting the key ID issuance request to the media server in accordance with an instruction from the wireless terminal that forms the wireless speaker system together with the each of the wireless speakers, and receiving the key ID from the media server; and
first key ID transmission means for transmitting the key ID acquired by the key ID acquisition means to the wireless terminal that forms the wireless speaker system together with the each of the wireless speakers, and
wherein each of the wireless terminals further includes:
key ID notification means for notifying the key ID received from the wireless speaker that forms the wireless speaker system together with the each of the wireless terminals to the wireless terminal of another of the plurality of wireless speaker systems that forms a group together with the wireless speaker system including the each of the wireless terminals;
key ID sharing means for sharing the key ID notified by the wireless terminal of another of the plurality of wireless speaker systems that forms a group together with the wireless speaker system including the each of the wireless terminals; and
second key ID transmission means for transmitting the key ID shared by the key ID sharing means to the wireless speaker that forms the wireless speaker system together with the each of the wireless terminals.

4. The audio system according to claim 3,
wherein the key ID notification means is configured to visualize the key ID acquired by the key ID acquisition means, and display the key ID on a screen, and
wherein the key ID sharing means is configured to read the visualized key ID displayed on a screen of the wireless terminal of another of the plurality of wireless speaker systems that forms a group together with the wireless speaker system including the each of the wireless terminals, and share the read key ID.

5. The audio system according to any one of claims 2 to 4,
wherein the media server further includes audio-for-testing distribution means for simultaneously distributing, in accordance with a test instruction received from the wireless terminal of any one of the plurality of wireless speaker systems subjected to the group management by the group management means, pieces of audio data for testing respectively having different frequencies to the plurality of wireless speaker systems,
wherein each of the wireless terminals further includes:
test instruction transmission means for transmitting the test instruction to the media server in accordance with a test operation received from the user, and shifting an operation mode of the each of the wireless terminals to a test mode;
test mode switching means for switching the operation mode of the each of the wireless terminals to the test mode in accordance with a test mode switching operation received from the user;
reception timing measurement means for, during the test mode, measuring a reception timing of the audio data for testing output from the wireless speaker that forms the wireless speaker system together with the each of the wireless terminals, and measuring, through a video conferencing terminal, reception timings of respective pieces of audio data for testing output from the respective wireless speakers of others of the plurality of wireless speaker systems that form a group together with the wireless speaker system including the each of the wireless terminals;
delay time measurement means for setting, as a reference timing, the latest reception timing among the reception timing of the audio data for testing output from the wireless speaker that forms the wireless speaker system together with the each of the wireless terminals and the reception timings of the respective pieces of the audio data for testing output from the respective wireless speakers of the others of the plurality of wireless speaker systems that form a group together with the wireless speaker system including the each of the wireless terminals, which have been measured by the reception timing measurement means, and measuring, as a delay time, a difference between the reference timing and the reception timing of the audio data for testing output from the wireless speaker that forms the wireless speaker system together with the each of the wireless terminals; and
delay time notification means for notifying the delay time measured by the delay time measurement means to the wireless speaker that forms the wireless speaker system together with the each of the wireless terminals, and
wherein the reproduction-and-output means is configured to reproduce and output the audio data on the tune received by the tune reception means with a delay of the delay time notified by the wireless terminal that forms the wireless speaker system together with the each of the wireless speakers.

6. The audio system according to claim 1,
wherein each of the wireless terminals includes:
the key ID storage means;
the access means;
the tune reception means;
the tune list reception means;
the reproduction operation reception means;
the distribution requesting means; and
tune transfer means for transferring the audio data on the tune received from the media server by the tune reception means to the wireless speaker that forms the wireless speaker system together with the each of the wireless terminals,
wherein the wireless speaker includes the reproduction-and-output means, and
wherein the reproduction-and-output means is configured to reproduce and output the audio data on the tune transferred from the each of the wireless terminals that forms the wireless speaker system together with the own wireless speaker.

7. The audio system according to claim 6, wherein the each of the wireless terminals further includes:
key ID acquisition means for transmitting a key ID issuance request to the media server in accordance with an instruction from the user, and receiving the key ID from the media server;
key ID notification means for notifying the key ID acquired by the key ID acquisition means to the wireless terminal of another of the plurality of wireless speaker systems that forms a group together with the wireless speaker system including the each of the wireless terminals; and
key ID sharing means for sharing the key ID notified by the wireless terminal of the another of the plurality of wireless speaker systems that forms a group together with the wireless speaker system including the each of the wireless terminals.

8. The audio system according to claim 7,
wherein the key ID notification means is configured to visualize the key ID acquired by the key ID acquisition means, and display the key ID on a screen, and
wherein the key ID sharing means is configured to read the visualized key ID displayed on a screen of the wireless terminal of another of the plurality of wireless speaker systems that forms a group together with the wireless speaker system including the each of the wireless terminals, and share the read key ID.

9. The audio system according to any one of claims 6 to 8,
wherein the media server further includes audio-for-testing distribution means for simultaneously distributing, in accordance with a test instruction received from the wireless terminal of any one of the plurality of wireless speaker systems subjected to the group management by the group management means, pieces of audio data for testing respectively having different frequencies to the plurality of wireless speaker systems,
wherein each of the wireless terminals further includes:
test instruction transmission means for transmitting the test instruction to the media server in accordance with a test operation received from the user, and shifting an operation mode of the each of the wireless terminals to a test mode;
test mode switching means for switching the operation mode of the each of the wireless terminals to the test mode in accordance with a test mode switching operation received from the user;
reception timing measurement means for, during the test mode, measuring a reception timing of the audio data for testing output from the wireless speaker that forms the wireless speaker system together with the each of the wireless terminals, and also measuring, through a video conferencing terminal, reception timings of respective pieces of audio data for testing output from the respective wireless speakers of others of the plurality of wireless speaker systems that form a group together with the wireless speaker system including the each of the wireless terminals; and
delay time measurement means for setting, as a reference timing, the latest reception timing among the reception timing of the audio data for testing output from the wireless speaker that forms the wireless speaker system together with the each of the wireless terminals and the reception timings of respective pieces of audio data for testing output from the respective wireless speakers of others of the plurality of wireless speaker systems that form a group together with the wireless speaker system including the each of the wireless terminals, which have been measured by the reception timing measurement means, and measuring, as a delay time, a difference between the reference timing and the reception timing of the audio data for testing output from the wireless speaker that forms the wireless speaker system together with the each of the wireless terminals, and
wherein the tune transfer means is configured to transfer the audio data on the tune received from the media server by the tune reception means to the wireless speaker that forms the wireless speaker system together with the each of the wireless terminals after a delay of the delay time measured by the delay time measurement means.

10. A wireless speaker system, comprising:
a wireless speaker; and
a wireless terminal that functions as a remote controller for the wireless speaker,
the wireless speaker system comprising:
key ID storage means for storing a key ID shared with another of the wireless speaker systems that forms a group together with the wireless speaker system;
access means for achieving, through use of the key ID stored in the key ID storage means, connection to a media server configured to simultaneously distribute audio data on the same tune to a plurality of the wireless speaker systems that access through use of the key ID and to distribute a tune list to the wireless speaker;
tune reception means for receiving the audio data on the tune from the media server to which the connection has been achieved by the access means;
tune list reception means for receiving the tune list from the media server to which the connection has been achieved by the access means;
reproduction-and-output means for reproducing and outputting the audio data on the tune received by the tune reception means;
reproduction operation reception means for displaying a tune selection screen including the tune list received by the tune list reception means and receiving a reproduction operation accompanied by tune selection from a user; and
distribution requesting means for transmitting, to the media server, a distribution request accompanied by specification of a tune selected by the reproduction operation received by the reproduction operation reception means.

11. The wireless speaker system according to claim 10,
wherein the wireless speaker includes:
the key ID storage means;
the access means;
the tune reception means;
the tune list reception means;
the reproduction-and-output means;
the distribution requesting means; and
tune list transfer means for transferring the tune list received by the tune list reception means to the wireless terminal that forms the wireless speaker system together with the wireless speaker, and
wherein the wireless terminal includes:
the reproduction operation reception means; and
reproduction operation notification means for notifying operation content of the reproduction operation received by the reproduction operation reception means to the wireless speaker that forms the wireless speaker system together with the wireless terminal.

12. The wireless speaker system according to claim 11,
wherein the wireless terminal includes:
the key ID storage means;
the access means;
the tune reception means;
the tune list reception means;
the reproduction operation reception means;
the distribution requesting means; and
tune transfer means for transferring the audio data on the tune received from the media server by the tune reception means to the wireless speaker that forms the wireless speaker system together with the wireless terminal,
wherein the wireless speaker includes the reproduction-and-output means, and
wherein the reproduction-and-output means is configured to reproduce and output the audio data on the tune transferred from the wireless terminal that forms the wireless speaker system together with the own wireless speaker.

13. A wireless speaker, which forms a wireless speaker system together with a wireless terminal that functions as a remote controller, the wireless speaker comprising:
key ID storage means for storing a key ID shared with another of the wireless speaker systems that forms a group together with the wireless speaker system;
access means for achieving, through use of the key ID stored in the key ID storage means, connection to a media server configured to simultaneously distribute audio data on the same tune to a plurality of the wireless speaker systems that access through use of the same key ID and to distribute a tune list to the wireless speaker;
tune reception means for receiving the audio data on the tune from the media server to which the connection has been achieved by the access means;
tune list reception means for receiving the tune list from the media server to which the connection has been achieved by the access means;
reproduction-and-output means for reproducing and outputting the audio data on the tune received by the tune reception means;
reproduction operation reception means for displaying a tune selection screen including the tune list received by the tune list reception means and receiving a reproduction operation accompanied by tune selection from a user;
tune list transfer means for transferring the tune list received by the tune list reception means to the wireless terminal; and
distribution requesting means for transmitting, to the media server, a distribution request accompanied by specification of a tune selected in accordance with operation content of the reproduction operation received from the wireless terminal.

14. A wireless terminal, which serves as a remote controller for a wireless speaker, and forms a wireless speaker system together with the wireless speaker, the wireless terminal comprising:
key ID storage means for storing a key ID shared with another of the wireless speaker systems that forms a group together with the wireless speaker system;
access means for achieving, through use of the key ID stored in the key ID storage means, connection to a media server configured to simultaneously distribute audio data on the same tune to a plurality of the wireless speaker systems that access through use of the same key ID and to distribute a tune list to the wireless speaker;
tune reception means for receiving the audio data on the tune from the media server to which the connection has been achieved by the access means;
tune transfer means for transferring, to the wireless speaker, the audio data on the tune received from the media server by the tune reception means;
tune list reception means for receiving the tune list from the media server to which the connection has been achieved by the access means;
reproduction operation reception means for displaying a tune selection screen including the tune list received by the tune list reception means and receiving a reproduction operation accompanied by tune selection from a user; and
distribution requesting means for transmitting, to the media server, a distribution request accompanied by specification of a tune selected by the reproduction operation received by the reproduction operation reception means.

15. A program for causing a computer to function as a wireless speaker, which forms a wireless speaker system together with a wireless terminal that functions as a remote controller, the program causing the computer to function as:
key ID storage means for storing a key ID shared with another of the wireless speaker systems that forms a group together with the wireless speaker system;
access means for achieving, through use of the key ID stored in the key ID storage means, connection to a media server configured to simultaneously distribute audio data on the same tune to a plurality of the wireless speaker systems that access through use of the same key ID and to distribute a tune list to the wireless speaker;
tune reception means for receiving the audio data on the tune from the media server to which the connection has been achieved by the access means;
tune list reception means for receiving the tune list from the media server to which the connection has been achieved by the access means;
reproduction-and-output means for reproducing and outputting the audio data on the tune received by the tune reception means;
reproduction operation reception means for displaying a tune selection screen including the tune list received by the tune list reception means and receiving a reproduction operation accompanied by tune selection from a user;
tune list transfer means for transferring the tune list received by the tune list reception means to the wireless terminal; and
distribution requesting means for transmitting, to the media server, a distribution request accompanied by specification of a tune selected in accordance with operation content of the reproduction operation received from the wireless terminal.

16. A program for causing a computer to function as a remote controller, which forms a wireless speaker system together with a wireless speaker, the program causing the computer to function as:
key ID storage means for storing a key ID shared with another of the wireless speaker systems that forms a group together with the wireless speaker system;
access means for achieving, through use of the key ID stored in the key ID storage means, connection to a media server configured to simultaneously distribute audio data on the same tune to a plurality of the wireless speaker systems that access through use of the same key ID and to distribute a tune list to the wireless speaker;
tune reception means for receiving the audio data on the tune from the media server to which the connection has been achieved by the access means;
tune transfer means for transferring, to the wireless speaker, the audio data on the tune received from the media server by the tune reception means;
tune list reception means for receiving the tune list from the media server to which the connection has been achieved by the access means;
reproduction operation reception means for displaying a tune selection screen including the tune list received by the tune list reception means and receiving a reproduction operation accompanied by tune selection from a user; and
distribution requesting means for transmitting, to the media server, a distribution request accompanied by specification of a tune selected by the reproduction operation received by the reproduction operation reception means.

17. An audio reproduction method, which involves using: a plurality of wireless speaker systems each including a wireless speaker and a wireless terminal that functions as a remote controller for the wireless speaker; and a media server configured to distribute audio data to the plurality of wireless speaker systems, the audio reproduction method comprising:
storing, by each of the plurality of wireless speaker systems, a key ID shared with another of the plurality of wireless speaker systems that forms a group together with the each of the plurality of wireless speaker systems;
accessing, by the each of the plurality of wireless speaker systems, the media server through use of the key ID to achieve connection to the media server, receiving audio data on a tune from the media server, and reproducing and outputting the audio data on the tune, and receiving a tune list from the media server, displaying a tune selection screen including the tune list, receiving a reproduction operation accompanied by tune selection from a user, and transmitting a distribution request accompanied by specification of the tune selected by the reproduction operation to the media server;
performing, by the media server, group management on the plurality of wireless speaker systems that have accessed the media server through use of the same key ID;
simultaneously distributing, by the media server, the audio data on the same tune to the plurality of wireless speaker systems subjected to the group management, and distributing the tune list; and
changing, by the media server, when the distribution request is received from any one of the plurality of wireless speaker systems subjected to the group management, the audio data on the tune to be simultaneously distributed to the plurality of wireless speaker systems to the audio data on the tune specified by the distribution request.
